# EUROPEAN PATENT APPLICATION

(11) **EP 4 576 433 A1**
(43) Date of publication of application: **25.06.2025**
(21) Application number: 23862467.0
(22) Date of filing: 07.09.2023
(51) Int. Cl.: H01Q 15/00, H01Q 19/10, H01Q 21/30

(54) **BASE STATION ANTENNA AND BASE STATION**

(30) Priority: 08.09.2022 CN 202211097482
(71) Applicant: Huawei Technologies Co., Ltd., Shenzhen, Guangdong 518129 (CN)
(72) Inventor: XIAO, Weihong, Shenzhen, Guangdong 518129 (CN); DAOJIAN, Dingjiu, Shenzhen, Guangdong 518129 (CN); LIU, Xu, Shenzhen, Guangdong 518129 (CN); BAI, Xue, Shenzhen, Guangdong 518129 (CN); ZHANG, Yulu, Shenzhen, Guangdong 518129 (CN)
(74) Representative: Körber, Martin Hans
(86) International application number: PCT/CN2023/117447
(87) International publication number: WO 2024/051773

(57) **Abstract**

This application provides a base station antenna and a base station. The base station antenna includes a first antenna array, a frequency selective surface, a second antenna array, and an antenna conductive component. The frequency selective surface is located between a first radiator of a radiating element of the first antenna array and the second antenna array. The frequency selective surface is configured to reflect a radiation signal of the first antenna array and transmit a radiation signal of the second antenna array. The antenna conductive component and the first antenna array are located on a same side of an array surface of the second antenna array. The antenna conductive component includes a conductive substrate, a first structural unit, and a second structural unit. Both the first structural unit and the second structural unit encircle the conductive substrate once, and the first structural unit and the second structural unit are spaced apart and adjacent to each other, to form a capacitor. The base station includes a pole and the base station antenna, and the base station antenna is fastened to the pole. In this application, a problem of an electromagnetic shadow caused by blocking of a metal component can be mitigated.

## Description

This application claims priority to Chinese Patent Application No. 202211097482.8, filed with the China National Intellectual Property Administration on September 8, 2022 and entitled "BASE STATION ANTENNA AND BASE STATION", which is incorporated herein by reference in its entirety.

### TECHNICAL FIELD

This application relates to the field of antenna technologies, and in particular, to a base station antenna and a base station.

### BACKGROUND

In an antenna system, radiating elements may be blocked by surrounding metal components. When electromagnetic waves are propagated to the metal components, scattering occurs on surfaces of the metal components, the electromagnetic waves cannot be completely propagated to back sides of the metal components. Consequently, an electromagnetic shadow is generated at the back sides of the metal components. For a signal receiving process of an antenna, the electromagnetic shadow causes deterioration of quality of received signals of radiating elements located at the back sides of the metal components. For a signal radiation process of the antenna, the electromagnetic shadow affects communication quality of terminals located at the back sides of the metal components.

### SUMMARY

This application provides a base station antenna and a base station, to mitigate a problem of an electromagnetic shadow caused by blocking of a metal component.

According to a first aspect, this application provides a base station antenna, including a first antenna array, a frequency selective surface, a second antenna array, and an antenna conductive component. The frequency selective surface is located between a first radiator of a radiating element of the first antenna array and the second antenna array. The frequency selective surface is configured to reflect a radiation signal of the first antenna array and transmit a radiation signal of the second antenna array. The antenna conductive component and the first antenna array are located on a same side of an array surface of the second antenna array. The antenna conductive component includes a conductive substrate, a first structural unit, and a second structural unit. Both the first structural unit and the second structural unit encircle the conductive substrate once, and the first structural unit and the second structural unit are spaced apart and adjacent to each other, to form a capacitor.

**In** the solution of this application, the frequency selective surface is located between the first radiator of the radiating element of the first antenna array and the second antenna array, so that the frequency selective surface can be used as a reference surface to implement stacked arrangement of the first antenna array and the second antenna array. **In** the stacked arrangement, antenna arrays with more frequency bands and channels can be deployed in a case of a limited dimension of an antenna aperture, to meet a communication requirement. Because the frequency selective surface can allow transmitting an electromagnetic wave of the second antenna array, the frequency selective surface does not block a signal of the second antenna array. The antenna conductive component physically blocks the second antenna array due to a position of the antenna conductive component. However, a slot is formed between structural units in the antenna conductive component, the slot and structural units on two sides may form a capacitor, and the capacitor restricts an electromagnetic wave to propagate in the slot, so that the electromagnetic wave can propagate around the antenna conductive component to a back side of the antenna conductive component, thereby reducing or eliminating an electromagnetic shadow.

In an implementation of the first aspect, the antenna conductive component is located between the first antenna array and the second antenna array. In this solution, the antenna conductive component is disposed between the first antenna array and the second antenna array. This still meets a design in which the antenna conductive component and the first antenna array are located on the same side of the array surface of the second antenna array. In this solution, the position of the antenna conductive component is limited, so that for a typical application scenario in which antennas are arranged in a stacked manner, the antenna arrays with more frequency bands and channels can be deployed in the case of the limited dimension of the antenna aperture, and the electromagnetic shadow can be mitigated.

In an implementation of the first aspect, the conductive substrate includes a feeding network, and the feeding network is connected to the radiating element of the first antenna array. In this solution, a structural unit and a capacitor are formed on an outer side of the feeding network, so that the feeding network can have electromagnetic stealth performance, and a problem of an electromagnetic shadow caused by physical blocking of the feeding network on the second antenna array is mitigated.

In an implementation of the first aspect, the frequency selective surface is not electrically connected to the first antenna array and the second antenna array, and/or the frequency selective surface is not electrically connected to the feeding network. In this solution, the frequency selective surface is not electrically connected to the antenna array, so that a feed signal of the antenna array is not transmitted through the frequency selective surface. Therefore, a feed path can be shortened, and a loss can be reduced. In addition, a structure of the frequency selective surface can be simple, and costs can be reduced. Because the frequency selective surface is not electrically connected to the feeding network used as the conductive substrate, there is basically no coupling between the frequency selective surface and the feeding network, so that electromagnetic stealth performance and frequency selection performance of the frequency selective surface can be ensured.

In an implementation of the first aspect, the first antenna array and the antenna conductive component are located on a same side of the frequency selective surface. In this solution, a position relationship between the first antenna array, the antenna conductive component, and the frequency selective surface is limited, so that for the typical application scenario in which the antennas are arranged in the stacked manner, the antenna arrays with more frequency bands and channels can be deployed in the case of the limited dimension of the antenna aperture, and the electromagnetic shadow can be mitigated.

In an implementation of the first aspect, the radiating element of the first antenna array includes a feeding structure, the feeding structure is connected to the first radiator and the feeding network, the feeding structure passes through the frequency selective surface, and the first radiator and the antenna conductive component are respectively located on two opposite sides of the frequency selective surface.

In this solution, the position relationship between the first antenna array, the antenna conductive component, and the frequency selective surface is limited, so that for the typical application scenario in which the antennas are arranged in the stacked manner, the antenna arrays with more frequency bands and channels can be deployed in the case of the limited dimension of the antenna aperture, and the electromagnetic shadow can be mitigated. In this solution, a position of the frequency selective surface may be determined based on an antenna design requirement. The antenna conductive component is disposed on a side of the frequency selective surface facing away from the first radiator, so that a distance between the antenna conductive component and the first radiator is large, to reduce impact of the antenna conductive component (including the feeding network) on near-field coupling of the first antenna array, and ensure performance of the first antenna array.

In an implementation of the first aspect, the frequency selective surface includes a first frequency selective surface and a second frequency selective surface that are stacked and spaced apart, where the first frequency selective surface is located between the first radiator and the second frequency selective surface. The radiating element of the first antenna array includes a feeding structure, where the feeding structure is connected to the first radiator and the feeding network, the feeding structure passes through the first frequency selective surface, and the first radiator and the antenna conductive component are respectively located on two opposite sides of the first frequency selective surface.

In this solution, a quantity of frequency selective surfaces is limited, and the position relationship between the first antenna array, the antenna conductive component, and the frequency selective surface is limited, so that for the typical application scenario in which the antennas are arranged in the stacked manner, the antenna arrays with more frequency bands and channels can be deployed in the case of the limited dimension of the antenna aperture, and the electromagnetic shadow can be mitigated. In this solution, positions of the first frequency selective surface and the second frequency selective surface may be determined based on an antenna design requirement. A thickness of the antenna conductive component (where the conductive substrate is the feeding network) can be small, so that the antenna conductive component can be located between the first frequency selective surface and the second frequency selective surface. In this way, a total thickness of a first antenna can be small. In addition, a plurality of layers of frequency selective surfaces may enhance filtering selectivity, facilitating expansion of a bandwidth of an antenna.

In an implementation of the first aspect, the frequency selective surface includes a first frequency selective surface and a second frequency selective surface that are stacked and spaced apart, where the first frequency selective surface is located between the first radiator and the second frequency selective surface. The antenna conductive component passes through the first frequency selective surface, and the radiating element of the first antenna array and the second antenna array are respectively located on two opposite sides of the first frequency selective surface.

In this solution, a quantity of frequency selective surfaces is limited, and the position relationship between the first antenna array, the antenna conductive component, and the frequency selective surface is limited, so that for the typical application scenario in which the antennas are arranged in the stacked manner, the antenna arrays with more frequency bands and channels can be deployed in the case of the limited dimension of the antenna aperture, and the electromagnetic shadow can be mitigated. In this solution, positions of the first frequency selective surface and the second frequency selective surface may be determined based on an antenna design requirement. The antenna conductive component (where the conductive substrate is the feeding network) passes through the first frequency selective surface, so that a distance between the feeding network and the first radiator is not excessively large, to reduce a loss. In addition, the distance between the feeding network and the first radiator is not excessively small, to mitigate impact of the feeding network on near-field coupling of the first antenna array. In addition, a plurality of layers of frequency selective surfaces may enhance filtering selectivity, facilitating expansion of a bandwidth of the second antenna array.

In an implementation of the first aspect, the first radiator includes a second radiator and a third radiator, where a frequency band of the second radiator is different from a frequency band of the third radiator. The feeding network includes a first feeding network and a second feeding network, where the first feeding network is electrically connected to the second radiator, and the second feeding network is electrically connected to the third radiator. In this solution, the first antenna array includes a plurality of frequency bands, so that a quantity of frequency bands and a quantity of channels of the base station antenna can be increased, to increase utilization of a dimension of an antenna aperture.

In an implementation of the first aspect, a radiating element of the second antenna array includes a fourth radiator and a fifth radiator, and a frequency band of the fourth radiator is different from a frequency band of the fifth radiator. In this solution, the second antenna array has a plurality of frequency bands, so that a quantity of frequency bands and a quantity of channels can be extended.

In an implementation of the first aspect, a minimum spacing between the frequency selective surface and the antenna conductive component is greater than or equal to 0.1 time a wavelength corresponding to a highest operating frequency of the second antenna array. In this solution, the minimum spacing between the frequency selective surface and the antenna conductive component is limited, so that strong coupling between the frequency selective surface and the antenna conductive component can be avoided, to ensure electromagnetic stealth performance and frequency selection performance of the frequency selective surface.

In an implementation of the first aspect, the frequency selective surface includes a plurality of frequency selective units, and the plurality of frequency selective units include a first frequency selective unit. A structure of the first frequency selective unit is different from a structure of another frequency selective unit, and the first frequency selective unit overlaps an orthographic projection of the antenna conductive component on the frequency selective surface.

In this solution, the structure of the first frequency selective unit in the frequency selective surface is unique, and such a frequency selective surface may be considered to be of a quasi-periodic array structure. The frequency selective surface is manufactured into the quasi-periodic array structure, so that the structure of the first frequency selective unit close to the antenna conductive component is different from the structure of the another frequency selective unit, and coupling between the frequency selective surface and the antenna conductive component can be reduced, to ensure electromagnetic stealth performance and frequency selection performance of the frequency selective surface. This solution is applicable to the following scenario: If a spacing between the frequency selective surface and the antenna conductive component cannot meet a requirement of the minimum spacing due to a product design limitation, coupling between the frequency selective surface and the antenna conductive component can be reduced by using this solution.

In an implementation of the first aspect, the frequency selective surface includes a first part and a second part connected to each other, the first part does not include a conductor material, the first part overlaps an orthographic projection of the antenna conductive component on the frequency selective surface, and the second part includes a conductor material.

In this solution, a conductor layer in the first part that is of the frequency selective surface and that is close to the antenna conductive component is removed, so that coupling between the frequency selective surface and the antenna conductive component can be greatly reduced, to ensure electromagnetic stealth performance and frequency selection performance of the frequency selective surface. This solution is applicable to the following scenario: If a spacing between the frequency selective surface and the antenna conductive component cannot meet a requirement of the minimum spacing due to a product design limitation, coupling between the frequency selective surface and the antenna conductive component can be reduced by using this solution.

In an implementation of the first aspect, the base station antenna includes a first radome and a second radome. The first antenna array, the frequency selective surface, and the antenna conductive component are all located in the first radome, and the second antenna array is located in the second radome. In this solution, the first antenna array and the second antenna array are respectively disposed in different radomes, so that the two antennas can be separately deployed, to implement a decoupling design and flexible deployment of antennas on different frequency bands.

In an implementation of the first aspect, capacitance values of different parts of the capacitor are different. In this solution, because capacitance values of different regions of the capacitor are different, electromagnetic wave signals of different frequency bands can all resonate in a slot based on respective electrical lengths of the electromagnetic wave signals, so that electromagnetic waves of the different frequency bands can all pass through the slot. Therefore, the capacitance values of the different regions of the capacitor are different, so that electromagnetic waves of a plurality of frequency bands can be allowed to pass through the slot, to expand a stealth bandwidth.

In an implementation of the first aspect, the antenna conductive component includes at least two structural units, and both the first structural unit and the second structural unit are structural units in the at least two structural units. At least one structural unit is provided with a coupling slot, and parts of the structural unit that are respectively located on two sides of the coupling slot are separated by the coupling slot, and are coupled via the coupling slot.

In this solution, a coupling slot is formed in a structural unit, so that different parts of the structural unit are sequentially assembled on the conductive substrate, and finally assembled into a complete structural unit. In this way, reliable assembly of the structural unit can be implemented in some scenarios. Especially when a size of the conductive substrate is large and a quantity of structural units is large, an assembly process can be simplified in a split assembly manner, and an assembly yield is improved. In addition, the coupling slot can allow electromagnetic waves of some frequency bands to pass through, so that the antenna conductive component has a function of expanding a stealth bandwidth to some extent.

In an implementation of the first aspect, the antenna conductive component includes the at least two structural units, and both the first structural unit and the second structural unit are the structural units in the at least two structural units. The at least two structural units are of a same structure, there is a slot between any two adjacent structural units, slots are of a same shape, and the capacitor is formed between any two adjacent structural units.

In this solution, structures of all structural units are consistent. There is a slot between any two structural units, and the slots are of a same shape. In this way, the capacitor is formed between any two adjacent structural units. In this solution, a plurality of capacitors are formed on the antenna conductive component, so that an electromagnetic wave can be diffracted in each region of the antenna conductive component, to enable the entire antenna conductive component to be hidden from the electromagnetic wave, thereby avoiding an electromagnetic shadow. In this solution, all structural units can form a periodic structure layer, and the periodic structure layer is easy to manufacture and has good mass production performance.

In an implementation of the first aspect, the antenna conductive component includes the at least two structural units, and both the first structural unit and the second structural unit are the structural units in the at least two structural units. Structures of the at least two structural units are not totally the same, and/or there is a slot between the at least two structural units, shapes of slots are not totally the same, and the capacitor is formed between any two adjacent structural units.

In this solution, "are not totally the same" means that any two are different; or at least two, but not all, are the same. In this solution, in comparison with the foregoing periodic structure layer, all structural units can form a quasi-periodic structure layer. The quasi-periodic structure layer can adapt to a shape and a structure of the conductive substrate.

According to a second aspect, this application provides a base station, including a pole and the base station antenna of any one of the foregoing implementations, where the base station antenna is fastened on the pole. In this solution, because the base station antenna includes antenna arrays arranged in a stacked manner, antenna arrays with more frequency bands and channels can be deployed in a case of a limited dimension of an antenna aperture, to meet a communication requirement. Due to the design of the antenna conductive component, an electromagnetic shadow conductivity problem of the stacked antenna can be mitigated.

### BRIEF DESCRIPTION OF DRAWINGS

FIG. 1 shows an application scenario in which a base station performs wireless communication with a terminal;
FIG. 2 shows an assembly structure of a base station according to an embodiment of this application;
FIG. 3 shows an internal framework structure of a part of the base station in FIG. 2;
FIG. 4 shows an internal framework structure of a base station antenna according to an embodiment of this application;
FIG. 5(a) shows a schematic structure of a frequency selective surface in the base station antenna in FIG. 4;
FIG. 5(b) shows another schematic structure of a frequency selective surface in the base station antenna in FIG. 4;
FIG. 6 is a diagram of an internal framework structure of a base station antenna according to an embodiment;
FIG. 7 is a diagram of an internal framework structure of a base station antenna according to an embodiment;
FIG. 8 is a diagram of an internal framework structure of a base station antenna according to an embodiment;
FIG. 9 is a diagram of an internal framework structure of a base station antenna according to an embodiment;
FIG. 10 is a diagram of an internal structure of a first antenna array of a base station antenna according to an embodiment;
FIG. 11(a) shows a quasi-periodic array structure design of a frequency selective surface according to an embodiment;
FIG. 11(b) shows a quasi-periodic array structure design of a frequency selective surface according to another embodiment;
FIG. 12 is a diagram of a three-dimensional structure of an antenna conductive component according to an embodiment;
FIG. 13 is a diagram of a side sectional structure of the antenna conductive component shown in FIG. 12;
FIG. 14 is a diagram of a three-dimensional structure of an antenna conductive component according to an embodiment;
FIG. 15(a) is a diagram of a three-dimensional structure of an antenna conductive component according to an embodiment;
FIG. 15(b) is a diagram of a locally enlarged structure at A in FIG. 15(a);
FIG. 16 is a diagram of a three-dimensional structure of an antenna conductive component according to an embodiment;
FIG. 17 shows an application principle of the antenna conductive component shown in FIG. 16 in a base station antenna;
FIG. 18 is a locally enlarged diagram of the structure shown in FIG. 17;
FIG. 19 is a diagram of a three-dimensional structure of an antenna conductive component according to an embodiment;
FIG. 20 is a diagram of a three-dimensional structure of an antenna conductive component according to an embodiment;
FIG. 21 is a diagram of a three-dimensional structure of an antenna conductive component according to an embodiment;
FIG. 22 is a diagram of a three-dimensional structure of an antenna conductive component according to an embodiment;
FIG. 23 is a diagram of a side view structure of the antenna conductive component shown in FIG. 22;
FIG. 24 is a diagram of a three-dimensional structure of an antenna conductive component according to an embodiment;
FIG. 25 is a diagram of a three-dimensional structure of an antenna conductive component according to an embodiment;
FIG. 26(a) is a diagram of a three-dimensional structure of an antenna conductive component according to an embodiment;
FIG. 26(b) is a diagram of a three-dimensional structure of an antenna conductive component according to an embodiment;
FIG. 27 is a diagram of a three-dimensional structure of an antenna conductive component according to an embodiment; and
FIG. 28 is a diagram of a three-dimensional structure of an antenna conductive component according to an embodiment.

Reference numerals:
1-base station; 11-pole; 12-pole support; 13-radome; 14-antenna array; 15-radio frequency processing unit; 16-cable; 17-baseband processing unit; 18-feeding network; 181-phase shifter; 182-power splitter; 183-filter;
2-base station antenna; 21-first radome; 2A-first antenna array; 22-first radiating element; 221-first radiator; 222-feeding structure; 24-frequency selective surface; 24a-frequency selective unit; 24b-frequency selective unit; 24c-frequency selective unit; 2B-second antenna array; 25-second radiating element; 251-radiator; 252-feeding structure; 26-second radome; 211-radiator; 212-first feeding network; 213-radiator; 214-second feeding network;
2'-base station antenna; 223-radiating element; 224-radiating element;
3-antenna conductive component; 3a-spacing; 31-conductive substrate; 32-structural unit; 32a-first capacitor; 32b-first part; 32c-second part; 32d-third part; 32e-fourth part; 33-structure layer; E-electric field direction; H-magnetic field direction; K-propagation direction of an electromagnetic wave;
4-antenna conductive component; 41-conductive substrate; 42-structural unit; 42b-first part; 42c-second part;
5-antenna conductive component; 51-conductive substrate; 52-structural unit; 52b-first part; 52d-sub-slot; 52c-second part;
6-antenna conductive component; 61-conductive substrate; 63-structure layer; 62-structural unit; 62b-first part; 62c-second part; 62d-third part; 62e-fourth part;
7-antenna conductive component; 71-conductive substrate; 72-structural unit; 721-first part; 722-second part; 723-third part; 724-fourth part; 72b-first part; 72c-second part; 72f-coupling slot; 72g-coupling slot; 72h-coupling slot; 72i-coupling slot;
8-antenna conductive component; 81-conductive substrate; 82-structural unit; 821-first part; 822-second part; 82b-first part; 82c-second part; 82f-coupling slot; 82g-coupling slot;
9-antenna conductive component; 91-conductive substrate; 92-structural unit; 92b-first part; 92c-second part; 92f-hollow region; 92g-hollow region;
10-antenna conductive component; 101-conductive substrate; 102-structural unit; 102a-first capacitor; 103a-first insulation medium; 103b-second insulation medium;
20-antenna conductive component; 201-conductive substrate; 202-structural unit; 202a-first capacitor; 203-second capacitor component; 204-first capacitor component;
30-antenna conductive component; 301-conductive substrate; 302-structural unit; 302a-first capacitor; 303-inductive element;
40-antenna conductive component; 401-conductive substrate; 402-structural unit; 402a-first capacitor;
50-antenna conductive component; 501-conductive substrate; 502-structural unit; 502f-coupling slot; 502g-coupling slot; 502h-coupling slot; 502i-coupling slot; 503-first part; 504-second part; 505-third part; 506-fourth part;
60-antenna conductive component; 601-conductive substrate; 602-structural unit; 602f-coupling slot; 602g-coupling slot; 603-first part; 604-second part;
70-base station antenna; 76-first radome; 751-radiator; 771-radiator;
80-base station antenna; 84-frequency selective surface;
90-base station antenna; 941-first frequency selective surface; 942-second frequency selective surface;
100-base station antenna; 141-first frequency selective surface; 142-second frequency selective surface.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In embodiments of this application, the terms "first", "second", "third", "fourth", "fifth", and the like are merely used to distinguish components, and cannot be understood as indication or implication of relative importance of components or implicitly indication of the quantity of indicated technical features. Therefore, a feature limited by "first", "second", or the like may explicitly or implicitly include one or more of the features. In the descriptions of embodiments of this application, unless otherwise specified, "a plurality of (layers)" means two (layers) or more (layers).

In embodiments of this application, the terms such as "up", "down", "front", "front side", "back", and "back side" are defined with respect to a position of a schematic structural placement in the accompanying drawings. It should be understood that these directional terms are relative concepts, are relative descriptions and clarifications, and may change accordingly based on a change of a position of a structure.

In embodiments of this application, unless otherwise specified, "and/or" is merely an association relationship for describing an associated object, and represents that three relationships may exist. For example, A and/or B may represent the following three cases: Only A exists alone, both A and B exist, and only B exists.

Embodiments of this application relate to a base station and a base station antenna. The following first describes the base station, and then describes the base station antenna.

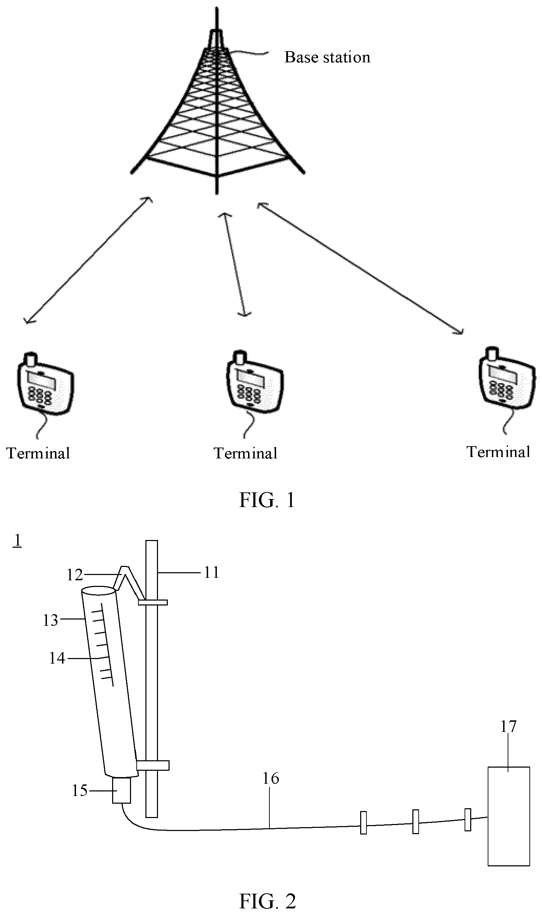

FIG. 1 shows an application scenario in which a base station performs wireless communication with a terminal. As shown in FIG. 1, the base station is configured to perform cell coverage of a radio signal, to implement communication between a terminal device and a radio network. Specifically, the base station may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB) in a long term evolution (long term evolution, LTE) system, or may be a radio controller in a cloud radio access network (cloud radio access network, CRAN) scenario. Alternatively, the base station may be a relay station, an access point, a vehicle-mounted device, a wearable device, a g node (gNodeB or gNB) in a new radio (new radio, NR) system, a base station in a future evolved network, or the like. This is not limited in embodiments of this application.

The base station is equipped with a base station antenna to implement signal transmission in space. FIG. 2 shows structural composition of a base station antenna equipped for the base station in FIG. 1. As shown in FIG. 2, the base station 1 may include a pole 11, a pole support 12, a radome 13, an antenna array 14, a radio frequency processing unit 15, a cable 16, and a baseband processing unit 17. The pole support 12, the radome 13, and the antenna array 14 may be collectively referred to as a base station antenna. The base station antenna may further include a feeding network, a reflection panel, and the like that are to be described below.

The pole 11 may be fastened to the ground. The pole support 12 is connected to the pole 11 and the radome 13, and the radome 13 is fastened to the pole 11 through the pole support 12. The antenna array 14 may be mounted in the radome 13. A feeding network may be further mounted in the radome 13. The radome 13 has a good electromagnetic wave penetration characteristic and weatherability, and can protect components mounted in the radome 13.

The antenna array 14 is configured to radiate and receive antenna signals. The antenna array 14 may include a plurality of radiating elements that are arranged in an array according to a specific rule, and each radiating element can radiate and receive electromagnetic waves. The radiating element may include an antenna element. In the antenna array 14, operating frequency bands of different radiating elements may be the same or different. The radiating element may include a radiator (for example, a radiation arm) and a feeding structure (for example, a balun) connected to each other. The radiator is configured to radiate and receive signals. The feeding structure is connected to the radiator and the feeding network, to transmit, to the radiator, an electrical signal transmitted by the feeding network, and transmit, to the feeding network, the signal received by the radiator.

The base station antenna may further include the reflection panel. The reflection panel may also be referred to as a bottom panel, an antenna panel, a reflection surface, or the like. For example, the reflection panel may be manufactured by using a metal material. The radiating element may be mounted on a surface on one side of the reflection panel. When the radiating element receives an antenna signal, the reflection panel may reflect and aggregate the antenna signal on a receiving point, to implement directional receiving. When the radiating element transmits an antenna signal, the reflection panel may implement directional transmission of the antenna signal. The reflection panel may enhance a capability of receiving or transmitting an antenna signal of the radiating element, and may further block and shield an interference effect of another signal from a back (where the back refers to a side of the reflection panel facing away from the radiating element) of the reflection panel on the antenna signal, to improve a gain of an antenna.

The radio frequency processing unit 15 (which may also be referred to as a remote radio unit (remote radio unit, RRU)) may be connected to the feeding network via a jumper, and is electrically connected to the antenna array 14 via the feeding network. The feeding network (which is further described below) may be used as a signal transmission path between the radio frequency processing unit 15 and the antenna array 14. The radio frequency processing unit 15 may be electrically connected to the baseband processing unit 17 (which may also be referred to as a baseband unit (baseband unit, BBU)) via the cable 16 (for example, an optical cable). As shown in FIG. 2, both the radio frequency processing unit 15 and the baseband processing unit 17 may be located outside the radome 13, and the radio frequency processing unit 15 may be located at a near end of the base station antenna.

The radio frequency processing unit 15 may perform frequency selection, amplification, and down-conversion on an antenna signal received by the antenna array 14, convert a processed antenna signal into an intermediate frequency signal or a baseband signal, and send the intermediate frequency signal or the baseband signal to the baseband processing unit 17. The radio frequency processing unit 15 may alternatively perform up-conversion and amplification on the baseband processing unit 17 or an intermediate frequency signal, and convert the baseband processing unit 17 or a processed intermediate frequency signal into an electromagnetic wave through the antenna array 14 and send the electromagnetic wave.

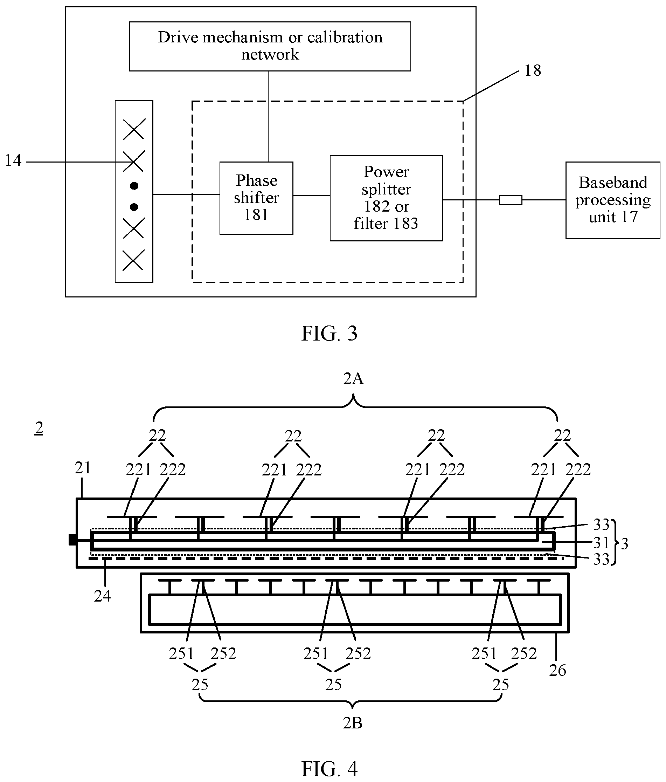

FIG. 3 may show an internal framework structure of a part of the base station 1 in FIG. 2. As shown in FIG. 3, the antenna array 14 of the base station 1 is connected to a feeding network 18. The feeding network 18 may implement different radiation beam directions through a drive mechanism, or may be connected to a calibration network to obtain a calibration signal required by the base station 1. The feeding network 18 may feed a signal to the antenna array 14 based on a specific amplitude and phase, or send a received signal to the baseband processing unit 17 based on a specific amplitude and phase.

For example, the feeding network 18 may include a phase shifter 181, and the phase shifter 181 is configured to change a maximum direction of antenna signal radiation. The feeding network 18 may further include a module configured to extend performance, for example, a power splitter 182. The power splitter 182 is configured to combine multiple signals into one signal, and transmit the signal through the antenna array 14; or the power splitter 182 divides one signal into multiple signals, for example, divides, based on different frequencies, a signal received by the antenna array 14 into multiple signals, and transmits the multiple signals to the baseband processing unit 17 for processing. The feeding network 18 may further include a filter 183, configured to filter out an interference signal. The feeding network 18 may further include a combiner. The feeding network 18 may further include a transmission line in any form, such as a coaxial line, a strip line, or a microstrip.

A structure of the base station 1 shown in FIG. 2 and FIG. 3 is merely an example. Actually, a structure of the base station in embodiments of this application may be flexibly designed based on a product requirement, and is not limited to the foregoing descriptions. For example, the base station may alternatively not include the pole 11, and the radome 13 may be fastened to a tower through the pole support 12.

In the base station, the antenna array may be blocked by surrounding conductor components (where the conductor component includes at least a conductive part, for example, all regions of the conductor component are conductors, or the conductor component includes a conductor part and an insulation part, and in the following, the conductor component is referred to as a conductive substrate). When electromagnetic waves are propagated to the conductor components, scattering occurs on surfaces of the conductor components, the electromagnetic waves cannot be completely propagated to back sides of the conductor components. Consequently, an electromagnetic shadow is generated at the back sides of the conductor components. For a signal receiving process, the electromagnetic shadow causes deterioration of quality of received signals of antenna arrays located at the back sides of the conductor components. For a signal radiation process, the electromagnetic shadow affects communication quality of terminals located at the back sides of the conductor components. In addition, with the development of the wireless communication industry, a base station is required to have more communication frequency bands and channels to meet a communication requirement. However, space resources of antenna installation platforms of operators' sites are limited, and dimensions of antenna apertures are strictly limited. As a result, a quantity of frequency bands and a quantity of channels cannot be increased.

To resolve the foregoing problem, for the base station antenna in embodiments of this application, an "electromagnetic stealth" design is used for a conductor component around an antenna array, so that an electromagnetic wave can bypass the conductor component and continue being propagated, thereby mitigating a problem of an electromagnetic shadow. According to a "stacking design" of the antenna array, antenna arrays with more frequency bands and channels can be disposed in a case of a limited dimension of an antenna aperture. The following first describes an overall framework structure of the base station antenna in detail, including the "stacking design", and then describes the "electromagnetic stealth" design.

FIG. 4 shows an internal framework structure of a base station antenna 2 in an embodiment. The base station antenna 2 features an electromagnetic stealth design and a stacking design.

As shown in FIG. 4, the base station antenna 2 may include a first antenna and a second antenna.

The first antenna may include a first radome 21, a first antenna array 2A, an antenna conductive component 3, and a frequency selective surface (frequency selective surface, FSS) 24. The first antenna array 2A, the antenna conductive component 3, and the frequency selective surface 24 may all be located in the first radome 21.

The second antenna may include a second radome 26 and a second antenna array 2B, and the second antenna array 2B is located in the second radome 26.

In this embodiment, the first radome 21 and the second radome 26 are two independent radomes, and the two radomes may be fastened to a same pole or tower. The first antenna array 2A and the second antenna array 2B are respectively disposed in different radomes, so that the two antennas can be separately deployed, to implement a decoupling design and flexible deployment of antennas on different frequency bands. It may be understood that the solution in this embodiment is merely an example. In another embodiment, the first antenna array and the second antenna array may alternatively be located in a same radome.

As shown in FIG. 4, the first antenna array 2A may include a plurality of first radiating elements 22. Frequency bands of the first radiating elements 22 may be consistent, or a frequency band of at least one first radiating element 22 is different from a frequency band of another first radiating element 22. The first radiating element 22 may include a radiator 221 (which may be referred to as a first radiator) and a feeding structure 222, and the radiator 221 and the feeding structure 222 are connected to each other. It may be understood that in FIG. 4, a horizontal line represents the radiator 221, and a vertical line represents the feeding structure 222. This is merely an example, and is not intended to limit specific structures and specific positions of the radiator 221 and the feeding structure 222.

In this embodiment of this application, the antenna conductive component 3 and the first antenna array 2A may be located on a same side of an array surface of the second antenna array 2B. For example, as shown in FIG. 4, the antenna conductive component 3 may be located between the first antenna array 2A and the second antenna array 2B, and it may be considered that the antenna conductive component 3, the first antenna array 2A, and the second antenna array 2B are arranged in a stacked manner. The antenna conductive component 3 may be long, for example, substantially blocking the second antenna array 2B.

In another embodiment, the antenna conductive component 3 and the first antenna array 2A being located on the same side of the array surface of the second antenna array 2B may further include the following design: The antenna conductive component 3, the first antenna array 2A, and the second antenna array 2B are sequentially stacked, and the first antenna array 2A is located between the antenna conductive component 3 and the second antenna array 2B. Alternatively, the antenna conductive component 3 and the first antenna array 2A may be approximately side-by-side (not in an evident stacking relationship), and are located on the same side of the second antenna array 2B.

In this embodiment, the antenna conductive component 3 may be a feeding network that features the electromagnetic stealth design. Descriptions are provided below.

As shown in FIG. 4, the antenna conductive component 3 may include a conductive substrate 31 and a structure layer 33. The conductive substrate 31 may be a feeding network, and the feeding network may include at least one of a phase shifter, a power splitter, a filter, or the like. The feeding network may be connected to the feeding structure 222 of the first radiating element 22 of the first antenna array 2A, to feed the first antenna array 2A. The structure layer 33 covers at least a part of an outer surface of the conductive substrate 31. For example, the structure layer 33 may cover only an outer surface of a main function part (for example, a part including a phase shifter, a power splitter, and a filter) of the conductive substrate 31, or the structure layer 33 may cover the whole outer surface of the conductive substrate 31. The structure layer 33 can enable an electromagnetic wave to bypass the conductive substrate 31 and continue being propagated, to reduce or eliminate an electromagnetic shadow. A specific structure and an operating principle of the structure layer 33 are described in detail below. The structure layer 33 may be light, and is applicable to a local position in an antenna.

In another embodiment, the antenna conductive component may alternatively be another component that features the electromagnetic stealth design. In other words, the conductive substrate in the antenna conductive component may be a conductive component other than the feeding network. The following lists several other antenna conductive components with reference to FIG. 2.

Refer to FIG. 2. The pole 11 may block a signal of the antenna array 14 in the radome 13, and a structure layer may cover an outer surface of the pole 11. Specific distribution of the structure layer may be determined based on a requirement. For example, the structure layer may cover a corresponding local region on the outer surface of the pole 11 based on a scanning range of the antenna array 14, or the structure layer may cover the whole outer surface of the pole 11. In this solution, the pole 11 is used as a conductive substrate, and the pole 11 and the structure layer may form an antenna conductive component.

Similarly, the pole support 12 may be used as a conductive substrate, and the pole support 12 and a structure layer on the pole support 12 may form another antenna conductive component.

Alternatively, another metal member (such as a drive mechanism or a support structure) in the base station 1 may be used as a conductive substrate, and the metal member and a structure layer on the metal member may form another antenna conductive component.

In another embodiment, a specific position of the antenna conductive component may be different based on a specific product type of the antenna conductive component. However, the position of the antenna conductive component always meets the following design requirement: The antenna conductive component and the first antenna array are located on the same side of the array surface of the second antenna array.

As shown in FIG. 4, the second antenna array 2B may include a plurality of second radiating elements 25. Frequency bands of the second radiating elements 25 may be consistent, or a frequency band of at least one second radiating element 25 is different from a frequency band of another second radiating element 25. The second radiating element 25 may include a radiator 251 and a feeding structure 252, and the radiator 251 and the feeding structure 252 are connected to each other. It may be understood that in FIG. 4, a horizontal line represents the radiator 251, and a vertical line represents the feeding structure 252. This is merely an example, and is not intended to limit specific structures and specific positions of the radiator 251 and the feeding structure 252. It may be understood that, the second radome 26 may also include a reflection panel and a feeding network, each second radiating element 25 may be mounted on the reflection panel, and the feeding structure 252 is connected to the feeding network.

As shown in FIG. 4, in this embodiment, the first antenna array 2A and the antenna conductive component 3 may be located on one side of the frequency selective surface 24, and the second radiating element 25 may be located on the other side of the frequency selective surface 24. The "one side" and "the other side" of the frequency selective surface 24 may be two opposite sides in a thickness direction of the frequency selective surface 24. It may also be considered that the frequency selective surface 24 is located between the radiator 221 and the second antenna array 2B.

Therefore, the frequency selective surface 24 is used as a stacking reference surface, and it may be referred to that the first antenna array and the second antenna array are arranged in a stacked manner, or that the first antenna and the second antenna are arranged in a stacked manner. In the stacked arrangement, antenna arrays with more frequency bands and channels can be deployed in a case of a limited dimension of an antenna aperture, to meet a communication requirement.

In this embodiment, a frequency band of the first antenna array 2A may be lower than a frequency band of the second antenna array 2B. In this way, transceiver performance of the first antenna and the second antenna can be ensured. In another embodiment, the frequency band of the first antenna array 2A and the frequency band of the second antenna array 2B may not be limited.

In this embodiment of this application, the frequency selective surface 24 may be generally of a two-dimensional planar structure. From a perspective of a cross-sectional structure, the frequency selective surface 24 may include an insulation substrate layer and a conductor layer. The conductor layer is attached to the insulation substrate layer. Alternatively, the frequency selective surface 24 may include a conductor layer, but does not include an insulation substrate layer. The insulation substrate layer is made of an insulation material, and the conductor layer is made of a conductor material. The frequency selective surface 24 has a good design characteristic and may be light.

In this embodiment of this application, the frequency selective surface 24 may be divided into a plurality of frequency selective units, and all the frequency selective units may be arranged in a specific manner.

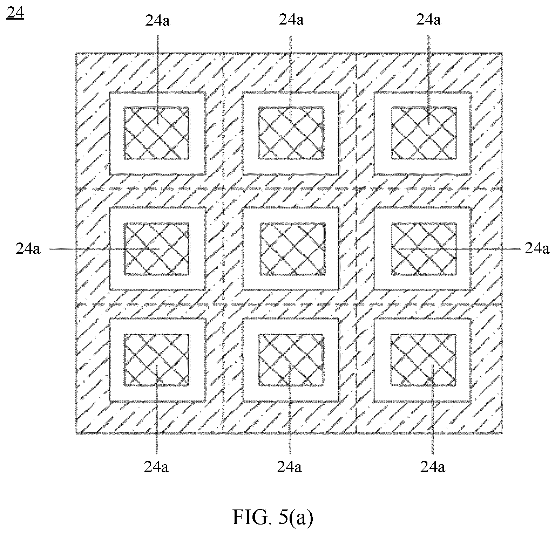

For example, in an implementation, all the frequency selective units may be closely connected without gaps. For example, FIG. 5(a) shows a schematic structure of a possible frequency selective surface. The frequency selective surface 24 may be divided into a plurality of frequency selective units 24a (in FIG. 5(a), a crossed dashed line is used for representing a boundary between the frequency selective units 24a, and the dashed line is not displayed in an actual product). The frequency selective units 24a are closely connected without gaps. For example, the frequency selective unit 24a may include two inner and outer metal parts (represented by different shadow lines), and there is a slot (a blank region between an inner shadow region and an outer shadow region) between the inner metal part and the outer metal part.

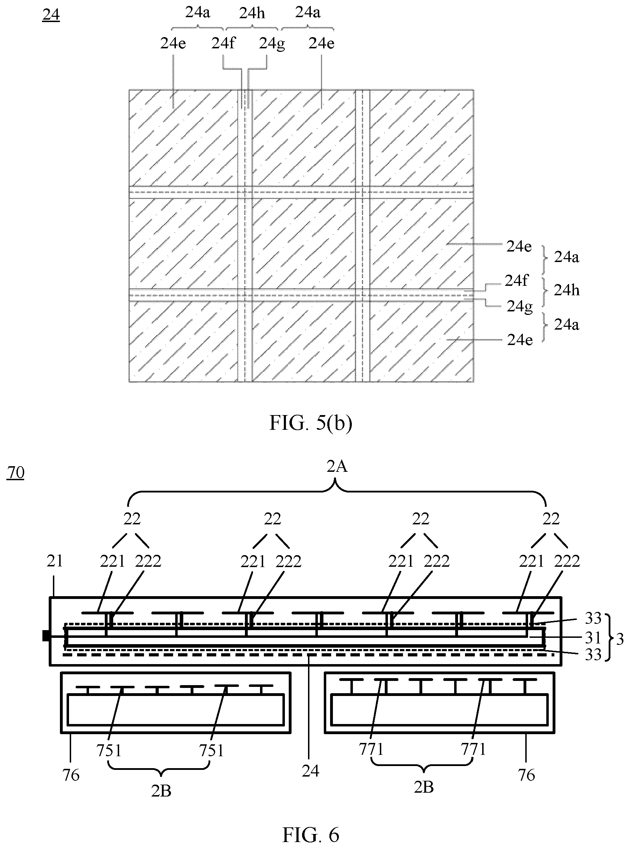

Alternatively, in another implementation, as shown in FIG. 5(b), a plurality of slots 24h may be formed on the frequency selective surface 24, and these slots 24h may be, for example, distributed in a crosswise manner. The slot 24h may penetrate or not penetrate the frequency selective surface 24. The frequency selective surface 24 may be divided into a plurality of frequency selective units 24a based on the slots 24h. For a single slot 24h and entity parts 24e on two sides of the slot 24h, an entity part 24e on one side of the slot 24h and a part 24f of the slot 24h may form a frequency selective unit 24a, and an entity part 24e on the other side of the slot 24h and the other part 24g of the slot 24h may form another frequency selective unit 24a. A dashed line in FIG. 5(b) may represent a boundary line between the part 24f and the other part 24g of the slot 24h (where the dashed line is not displayed in an actual product), and the dashed line may be, for example, located at a half width of the slot 24h.

In this embodiment of this application, the frequency selective unit may be approximately a two-dimensional planar structure or a three-dimensional structure. In an implementation, structures of all frequency selective units may be the same, and the frequency selective surface 24 may be considered to be of a periodic array structure. In another implementation, structures of all frequency selective units are not totally the same. For example, structures of any two frequency selective units are different (where each frequency selective unit may be referred to as a first frequency selective unit); or at least two frequency selective units are of a same structure (where each such frequency selective unit may be referred to as a first frequency selective unit), but a structure of the first frequency selective unit is different from a structure of another frequency selective unit. Such a frequency selective surface 24 may be considered to be of a quasi-periodic array structure.

As shown in FIG. 4, for example, the frequency selective surface 24 may have only one layer. In another embodiment, there may be a plurality of layers of frequency selective surfaces 24, and various layers of frequency selective surfaces 24 may be separated via an insulation material or air.

The frequency selective surface 24 has a specific frequency selection function, and may present transmittance for an incident wave of one frequency band, and reflectivity for an incident wave of another frequency band, so that transmission and reflection of incident electromagnetic waves can be effectively controlled. The frequency selective surface 24 may be, for example, a spatial filter, and interacts with an electromagnetic wave to exhibit an evident band-pass or bandstop filtering characteristic. The plurality of frequency selective surfaces 24 may be used as a multi-order spatial filter, to expand a bandwidth and increase frequency selectivity.

In this embodiment, the frequency selective surface 24 can reflect most electromagnetic waves radiated by the first antenna array 2A. Therefore, the frequency selective surface 24 may be used as a reflection panel of the first antenna array 2A. The frequency selective surface 24 can also transmit an electromagnetic wave radiated by the second antenna array 2B. Therefore, the frequency selective surface 24 does not block the second antenna array 2B, and the frequency selective surface 24 is equivalent to electromagnetic transparency for the electromagnetic wave radiated by the second antenna array 2B.

In this embodiment, refer to FIG. 4. A minimum spacing between the frequency selective surface 24 and the antenna conductive component 3 may be not less than 0.1 time a wavelength corresponding to a highest operating frequency of the second antenna array 2B. A spacing between the frequency selective surface 24 and the antenna conductive component 3 is a spacing between the frequency selective surface 24 and the structure layer 33. A meaning of the design is as follows: The spacing between the frequency selective surface 24 and the structure layer 33 is kept within a proper range (not excessively small), so that strong coupling between the frequency selective surface 24 and the structure layer 33 can be avoided, to ensure electromagnetic stealth performance and frequency selection performance of the frequency selective surface 24. In another embodiment, the spacing between the frequency selective surface 24 and the antenna conductive component 3 may not be limited.

In this embodiment, refer to FIG. 4. The frequency selective surface 24 may not be electrically connected to the first antenna array 2A. The frequency selective surface 24 may not be electrically connected to the feeding network used as the conductive substrate 31 either. Because the frequency selective surface 24 and the second antenna array 2B are respectively located in different radomes, the frequency selective surface 24 may not be electrically connected to the second antenna array 2B either. In another embodiment, if the second antenna array and the first antenna array are disposed in a same radome, the frequency selective surface 24 may not be electrically connected to neither the second antenna array nor the first antenna array. The "not electrical connection" may mean that the two are not directly connected through a conductor in structure (for example, the two are not connected at all in structure, and there is a spacing between the two; or the two are connected through an insulator), and there is no signal coupling.

An objective of the foregoing "not electrical connection" design is as follows: Because the frequency selective surface 24 is not electrically connected to both the first antenna array 2A and the second antenna array 2B, a feed signal of the antenna array is not transmitted through the frequency selective surface 24. This can shorten a feed path, and a loss can be reduced. In addition, a structure of the frequency selective surface 24 can be simple, and costs can be reduced. Because the frequency selective surface 24 is not electrically connected to the feeding network used as the conductive substrate 31, there is basically no coupling between the frequency selective surface 24 and the feeding network, so that electromagnetic stealth performance and frequency selection performance of the frequency selective surface 24 can be ensured.

In another embodiment, based on a product requirement, the frequency selective surface 24 may alternatively be electrically connected to the feeding network used as the conductive substrate 31. This can reduce impact of an induced current generated by the feeding network on the first antenna array 2A and the second antenna array 2B, to improve performance of a multi-frequency band base station antenna.

FIG. 6 shows an internal framework structure of a base station antenna 70 according to an embodiment. Different from the base station antenna 2 shown in FIG. 4, a second antenna of the base station antenna 70 may include two second antenna arrays 2B, and the two antenna arrays 2B may be respectively located in two second radomes 76. For example, a length of the first antenna array 2A may be greater than a length of any antenna array 2B, and the first antenna array 2A physically blocks the two antenna arrays 2B. A radiating element in one second antenna array 2B may include a radiator 751 (which may be referred to as a fourth radiator), and a radiating element in the other second antenna array 2B may include a radiator 771 (which may be referred to as a fifth radiator). A frequency band of the radiator 751 may be different from a frequency band of the radiator 771. For example, both the frequency band of the radiator 751 and the frequency band of the radiator 771 may be higher than a frequency band of the radiator 221.

FIG. 6 shows the two second antenna arrays 2B in the second antenna, and the frequency bands of the two second antenna arrays 2B are different. This is merely an example. In another embodiment, the second antenna may alternatively include more than two second antenna arrays 2B based on a product requirement. Frequency bands of all second antenna arrays 2B may be the same or not totally the same.

In this embodiment shown in FIG. 6, a frequency selective surface 24 can transmit electromagnetic waves of the two second antenna arrays 2B. A stealth design of an antenna conductive component 3 can mitigate a problem of an electromagnetic shadow. A stacking design of antenna arrays can be applied to dispose antenna arrays with more frequency bands and channels in a case of a limited dimension of an antenna aperture. Two antennas may be separately deployed, so that a decoupling design and flexible deployment of antennas on different frequency bands are implemented. In addition, because the second antenna may have a plurality of frequency bands, a quantity of frequency bands and a quantity of channels are further extended.

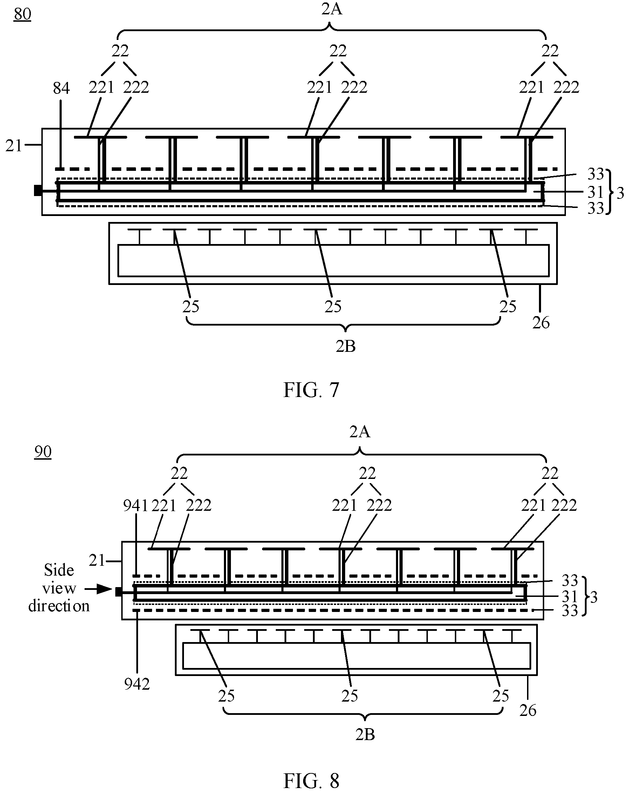

FIG. 7 shows an internal framework structure of a base station antenna 80 according to an embodiment. Different from the base station antenna 2 shown in FIG. 4, in the base station antenna 80, a feeding structure 222 of a first radiating element 22 may pass through a through hole on a frequency selective surface 84 to extend to the other side of a frequency selective surface 84, so that a first radiator 221 and an antenna conductive component 3 are respectively located on two opposite sides of the frequency selective surface 84. It may be understood that the frequency selective surface 84 is also located between the first radiator 221 and a second antenna array 2B.

In the embodiment shown in FIG. 7, a position of the frequency selective surface 84 may be determined based on an antenna design requirement. The antenna conductive component 3 is disposed on a side of the frequency selective surface 84 facing away from the first radiator 221, so that a distance between the antenna conductive component 3 and the first radiator 221 is large, to reduce impact of the antenna conductive component 3 (including the feeding network) on near-field coupling of a first antenna array 2A, and ensure performance of the first antenna array 2A.

FIG. 8 shows an internal framework structure of a base station antenna 90 according to an embodiment. The embodiment shown in FIG. 8 may be considered as a combination of the embodiments shown in FIG. 4 and FIG. 7.

As shown in FIG. 8, there may be two frequency selective surfaces in a first antenna, which are respectively referred to as a first frequency selective surface 941 and a second frequency selective surface 942. The first frequency selective surface 941 and the second frequency selective surface 942 are stacked and spaced apart. A feeding structure 222 of a first radiating element 22 may pass through a through hole on the first frequency selective surface 941 to extend to the other side of the first frequency selective surface 941, so that a first radiator 221 and an antenna conductive component 3 are respectively located on two opposite sides of the first frequency selective surface 941. For example, the second frequency selective surface 942 may be located between the antenna conductive component 3 and a second antenna array 2B. It may be understood that the first frequency selective surface 941 is also located between the first radiator 221 and the second frequency selective surface 942, and the antenna conductive component 3 is located between the first frequency selective surface 941 and the second frequency selective surface 942.

In the embodiment shown in FIG. 8, positions of the first frequency selective surface 941 and the second frequency selective surface 942 may be determined based on an antenna design requirement. A thickness (for example, a dimension in a vertical direction in FIG. 8) of the antenna conductive component 3 (where a conductive substrate 31 is a feeding network) can be small, so that the antenna conductive component 3 can be located between the first frequency selective surface 941 and the second frequency selective surface 942. In this way, a total thickness of the first antenna can be small. In addition, a plurality of layers of frequency selective surfaces may enhance filtering selectivity, facilitating expansion of a bandwidth of a second antenna.

In another embodiment, different from that shown in FIG. 8, the position of the second frequency selective surface 942 may alternatively be as follows: The second frequency selective surface 942 may be passed through by the feeding structure 222, and the second frequency selective surface 942 is located between the first radiator 221 and the antenna conductive component 3. The second frequency selective surface 942 is far away from the first radiator 221, and the first frequency selective surface 941 is close to the first radiator 221. Alternatively, the second frequency selective surface 942 may be passed through by the antenna conductive component 3, the first radiating element 22 and a part of the antenna conductive component 3 are located on one side of the second frequency selective surface 942, and the other part of the antenna conductive component 3 and the second antenna array 2B are located on the other side of the second frequency selective surface 942.

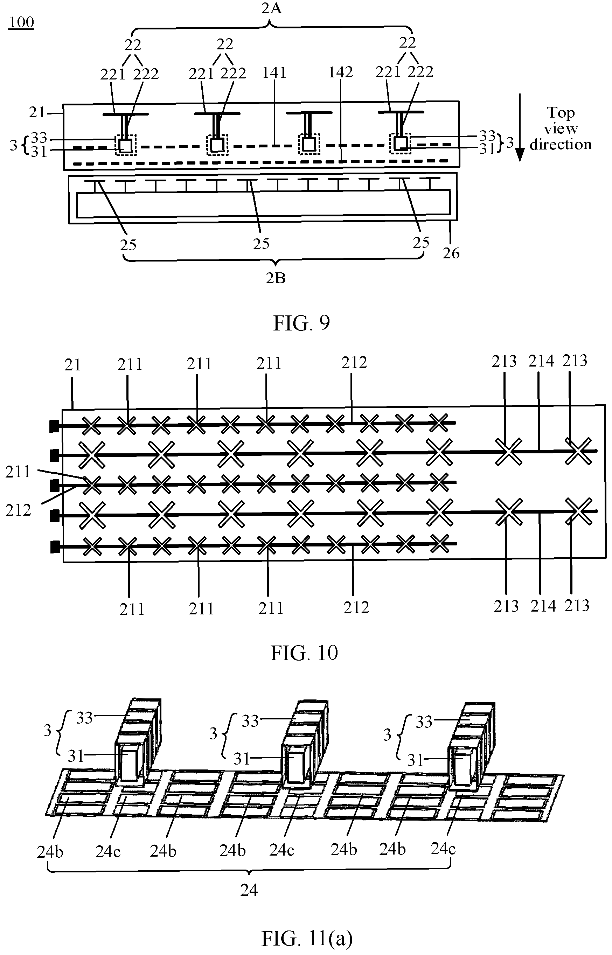

FIG. 9 shows an internal framework structure of a base station antenna 100 in another embodiment. The embodiment shown in FIG. 9 may be considered as a variant solution based on the embodiment shown in FIG. 8. A view direction of FIG. 9 may be a side view direction in FIG. 8.

FIG. 9 shows a plurality of antenna conductive components 3 (feeding networks covered with structure layer 33). A feeding network in each antenna conductive component 3 may be connected to feeding structures 222 of a plurality of first radiating elements 22 distributed in a direction perpendicular to a picture (where due to a view angle, only a connection between each feeding network and one feeding structure 222 is shown). Different from the base station antenna 90 shown in FIG. 8, in the base station antenna 100, the antenna conductive component 3 may pass through a through hole on a first frequency selective surface 141 to extend to the other side of the first frequency selective surface 141, so that the first radiating element 22 and a part of the antenna conductive component 3 are located on one side of the first frequency selective surface 141, and the other part of the antenna conductive component 3 is located on the other side of the first frequency selective surface 141. For example, a second frequency selective surface 142 may be located between the first frequency selective surface 141 and a second antenna array 2B. It may be understood that the first frequency selective surface 141 is also located between a first radiator 221 and the second frequency selective surface 142.

In the embodiment shown in FIG. 9, positions of the first frequency selective surface 141 and the second frequency selective surface 142 may be determined based on an antenna design requirement. The antenna conductive component 3 (where a conductive substrate 31 is the feeding network) passes through the first frequency selective surface 141, so that a distance between the feeding network and the first radiator 221 is not excessively large (in comparison with the embodiment shown in FIG. 8), to reduce a loss. In addition, the distance between the feeding network and the first radiator 221 is not excessively small (in comparison with a solution in which the antenna conductive component 3 and the first radiating element 22 are completely located on a same side of the first frequency selective surface 141), to mitigate impact of the feeding network on near-field coupling of the first antenna array 2A. In addition, a plurality of layers of frequency selective surfaces may enhance filtering selectivity, facilitating expansion of a bandwidth of a second antenna.

In another embodiment, different from that shown in FIG. 9, a position of the second frequency selective surface 142 may also be as follows: Like the first frequency selective surface 141, the second frequency selective surface 142 is also passed through by the antenna conductive component 3. The first radiating element 22 and a part of the antenna conductive component 3 are located on one side of the second frequency selective surface 142, and the other part of the antenna conductive component 3 is located on the other side of the second frequency selective surface 142. The first frequency selective surface 141 may be close to the first radiating element 22, and the second frequency selective surface 142 may be far away from the first radiating element 22.

According to the stacked arrangement design and the electromagnetic stealth design in any one of the foregoing embodiments, in an embodiment shown in FIG. 10 (where a view direction of FIG. 10 may be a top view direction in FIG. 9), a first radiator of a radiating element of a first antenna array of a base station antenna may include a plurality of radiators of different frequency bands, for example, a radiator 211 (which may be referred to as a second radiator) and a radiator 213 (which may be referred to as a third radiator) of different frequency bands. An arrangement manner of radiators of different frequency bands may be designed based on a requirement. For example, as shown in FIG. 10, a row of radiators 211 and a row of radiators 213 may be alternately arranged, in other words, arranged in a sequence of one row of radiators 211, one row of radiators 213, one row of radiators 211, one row of radiators 213, and one row of radiators 211. All radiators of the different frequency bands may not be electrically connected to a frequency selective surface, and the frequency selective surface may reflect radiation signals of radiators of all frequency bands.

For example, as shown in FIG. 10, a feeding network in an antenna conductive component may include a first feeding network 212 and a second feeding network 214. The first feeding network 212 is electrically connected to the radiator 211 to feed the radiator 211, and the second feeding network 214 is electrically connected to the radiator 213 to feed the radiator 213. Both the first feeding network 212 and the second feeding network 214 have electromagnetic stealth performance. Neither the first feeding network 212 nor the second feeding network 214 may be electrically connected to the frequency selective surface.

In the embodiment shown in FIG. 10, the first antenna array includes a plurality of frequency bands, so that a quantity of frequency bands and a quantity of channels of a base station antenna can be increased, to increase utilization of a dimension of an antenna aperture. Neither the first feeding network 212 nor the second feeding network 214 is electrically connected to the frequency selective surface, so that mutual coupling between radiators of different frequency bands in a first radome 21 can be weakened, and electromagnetic stealth performance and frequency selection performance of the frequency selective surface can be ensured, to improve antenna performance.

In the foregoing embodiments, for example, a minimum spacing between a frequency selective surface and an antenna conductive component may be limited (where the minimum spacing may be not less than 0.1 time a wavelength corresponding to a highest operating frequency of a second antenna array), to avoid strong coupling between the frequency selective surface and a structure layer, and ensure electromagnetic stealth performance and frequency selection performance of the frequency selective surface 24. In some scenarios, the minimum spacing may not need to be limited, but the frequency selective surface is manufactured into a quasi-periodic array structure, to reduce coupling between the frequency selective surface and the structure layer. Descriptions are provided below.

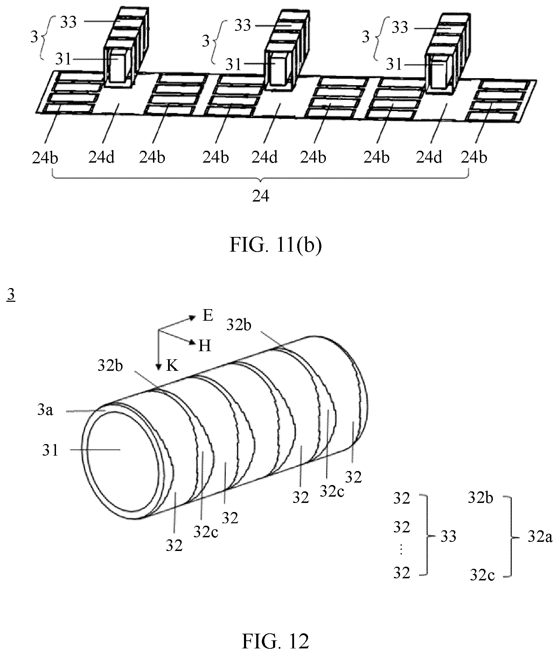

FIG. 11(a) and FIG. 11(b) describe a quasi-periodic array structure of a frequency selective surface by using an antenna conductive component 3 and a frequency selective surface 24 located below the antenna conductive component 3 as an example. It may be understood that this is not intended to limit a quantity of frequency selective surfaces and a position of the frequency selective surface relative to the antenna conductive component, nor is it intended to limit a structure and a type of the antenna conductive component. Actually, a design solution of the quasi-periodic array structure of the frequency selective surface is applicable to any one of the foregoing embodiments.

As shown in FIG. 11(a), in an embodiment, the frequency selective surface 24 includes a plurality of frequency selective units 24b and a plurality of frequency selective units 24c. A structure of the frequency selective unit 24c (which may be referred to as a first frequency selective unit) is different from a structure of the frequency selective unit 24b, or in other words, a structure of the frequency selective unit 24c is different from a structure of another frequency selective unit in the frequency selective surface 24. In addition, the frequency selective unit 24c may be a frequency selective unit close to the antenna conductive component 3. For example, the frequency selective unit 24c may overlap an orthographic projection of the antenna conductive component 3 on the frequency selective surface 24. "Overlapping" may include that the frequency selective unit 24c completely overlaps the orthographic projection, or a part of the frequency selective unit 24c overlaps a part of the orthographic projection (the frequency selective unit 24c is misaligned with the orthographic projection), or a part of the frequency selective unit 24c completely overlaps the orthographic projection (the frequency selective unit 24c is large, the orthographic projection is small, and the orthographic projection is completely located within a boundary of the frequency selective unit 24c), or entire region of the frequency selective unit 24c overlaps a part of the orthographic projection (the frequency selective unit 24c is small, the orthographic projection is large, and the frequency selective unit 24c is completely located within a boundary of the orthographic projection), or the like.

In this embodiment, if there are more than two layers of frequency selective surfaces 24, the design of the quasi-periodic array structure may be applied to all the frequency selective surfaces 24, or the design of the quasi-periodic array structure may be used only in a frequency selective surface 24 that is close to the antenna conductive component 3.

In this embodiment, the frequency selective surface 24 is manufactured into the quasi-periodic array structure, so that a structure of a frequency selective unit close to the antenna conductive component 3 is different from a structure of another frequency selective unit, and coupling between the frequency selective surface 24 and a structure layer 3 can be reduced, to ensure electromagnetic stealth performance and frequency selection performance of the frequency selective surface 24.

The solution in this embodiment is applicable to the following scenario: If a spacing between the frequency selective surface and the antenna conductive component cannot meet a requirement of the minimum spacing due to a product design limitation, coupling between the frequency selective surface and the structure layer can be reduced by using the solution in this embodiment. It may be understood that, in a scenario in which the spacing between the frequency selective surface and the antenna conductive component already meets the requirement of the minimum spacing, the solution in this embodiment may still be used, to further reduce coupling between the frequency selective surface and the structure layer.

Different from that shown in FIG. 11(a), as shown in FIG. 11(b), in another embodiment, a conductor layer of a region 24d that is close to the antenna conductive component 3 and that is originally on a frequency selective surface of a periodic array structure may be removed, to generate the frequency selective surface 24 of the quasi-periodic array structure. For a frequency selective surface 24 that includes an insulation substrate layer and a conductor layer, the region 24d may only include an insulation material but not a conductor material, frequency selective units 24b may be distributed on two sides of the region 24d, and the frequency selective unit 24b may include an insulation material and a conductor material. For a frequency selective surface 24 that does not include an insulation substrate layer, the region 24d may be hollowed out, and the frequency selective unit 24b may only include a conductor material.

As shown in FIG. 11(b), the region 24d may overlap an orthographic projection of the antenna conductive component 3 on the frequency selective surface 24. A meaning of "overlapping" here may be consistent with that described above. It may be understood that, it may be considered that the frequency selective surface 24 includes a first part and a second part, and the first part is connected to the second part. The first part is a part in which the region 24d is located, and the first part does not include the conductor material. The second part is a part in which the frequency selective unit 24b is located, and the second part includes the conductor material.

In the solution of this embodiment, the conductor layer of the region that is of the frequency selective surface and that is close to the antenna conductive component 3 is removed, so that coupling between the frequency selective surface and the structure layer can be greatly reduced.

The foregoing describes an overall framework structure of the base station antenna in embodiments of this application. The following describes the electromagnetic stealth design of the antenna conductive component in embodiments of this application in detail. It may be understood that all antenna conductive components described below may be used in the base station antenna in any embodiment of this application.

The foregoing describes an overall framework structure of the base station antenna in embodiments of this application. The following describes the electromagnetic stealth design of the antenna conductive component in embodiments of this application in detail. It may be understood that all antenna conductive components described below may be used in the base station antenna in any embodiment of this application.

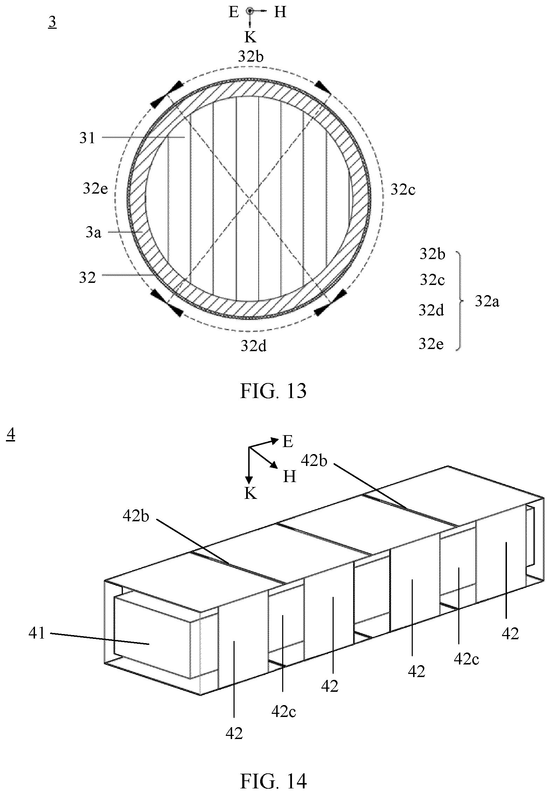

FIG. 12 shows a principle three-dimensional structure of the antenna conductive component 3 in FIG. 4, and FIG. 13 shows a principle side view structure of the antenna conductive component 3 in FIG. 12. As shown in FIG. 12 and FIG. 13, the antenna conductive component 3 may include a conductive substrate 31 and a structure layer 33, and the structure layer 33 includes at least two structural units 32.

For example, the conductive substrate 31 may be approximately cylindrical, and an axial length of the conductive substrate 31 is, for example, at least 1*λ (where λ is a wavelength corresponding to a lowest frequency band of the second antenna array 2B blocked by the conductive substrate 31). It may be understood that the approximately cylindrical conductive substrate 31 is merely an example, and an actual shape and structure of the conductive substrate are not limited in embodiments of this application. For example, a cross-sectional shape of the conductive substrate includes but is not limited to a quadrilateral, a circle, an ellipse, a hexagon, and the like.

FIG. 12 shows an example of five structural units 32. A structure of the structural unit 32 may be designed based on a requirement, for example, may be in a sheet shape or a ring shape.

As shown in FIG. 12, all structural units 32 are located on an outer side of the conductive substrate 31. In an implementation shown in FIG. 12, these structural units 32 may only encircle an outer circumferential surface (where the outer circumferential surface is a surface that encircles an axial line of the conductive substrate 31) of the conductive substrate 31 once, and are not disposed on an end surface (where the end surface is a surface that is perpendicular to the axial line of the conductive substrate 31) of the conductive substrate 31. In another implementation, the structural unit 32 may be distributed on both the outer circumferential surface and the end surface. The following uses the implementation shown in FIG. 12 as an example for further description.

In an implementation, the structural unit 32 may be made of a conductor material, and the structural unit 32 may be, for example, a sheet metal-formed metal member, whose weight and structural strength are large. In another implementation, the structural unit 32 may include a conductor layer and an insulation layer. The conductor layer and the insulation layer are arranged in a stacked manner, the insulation layer is close to the conductive substrate 31, and the conductor layer faces away from the conductive substrate 31. The conductor layer is made of a conductor material, and the insulation layer is made of an insulation material. The conductor layer may be thin, and structural strength is weak. The conductor layer is attached to the insulation layer, and the insulation layer can support and strengthen the conductor layer.

As shown in FIG. 12 and FIG. 13, there may be a spacing 3a between each structural unit 32 and the conductive substrate 31, in other words, each structural unit 32 and the conductive substrate 31 may be separated, and are not directly connected. A radial size (that is, a size of the spacing 3a along a radial direction of the conductive substrate 31, where the size may also be referred to as an electrical thickness) of the spacing 3a may be, for example, 0.5*λ (where λ is the wavelength corresponding to the lowest frequency band of the second antenna array 2B blocked by the conductive substrate 31).

As shown in FIG. 12 and FIG. 13, for a structural unit 32 made only of the conductor material, an insulation medium (where the insulation medium is represented by a shadow of a diagonal line in FIG. 13) may be filled in the spacing 3a between the structural unit 32 and the conductive substrate 31.

In an implementation, the insulation medium may be continuously distributed and cover the entire outer circumferential surface of the conductive substrate 31, in other words, the insulation medium is distributed in the spacing 3a, and is also distributed in a slot between adjacent structural units 32 (where the slot is further described below).

In another implementation, the insulation medium is distributed discretely on the entire outer circumferential surface of the conductive substrate 31. For example, the insulation medium is distributed only in the spacing 3a, but is not distributed in the slot between adjacent structural units 32. An insulation medium in each spacing 3a may be discretely distributed, insulation media at various positions form a structure similar to a plurality of connecting columns, a gap is formed between the insulation media at various positions, and air exists in the gap; or the insulation medium in each spacing 3a is continuously distributed.

In this embodiment, the insulation medium can connect the structural unit 32 to the conductive substrate 31, and can also electrically isolate the structural unit 32 from the conductive substrate 31.

In this embodiment, the insulation media at various positions on the outer circumferential surface of the conductive substrate 31 may be made of a same material, in other words, the insulation media at various positions on the outer circumferential surface of the conductive substrate 31 have a same dielectric constant. In another embodiment, the insulation media at various positions on the outer circumferential surface of the conductive substrate may be different materials with different dielectric constants, and this solution is further described below.

In this embodiment, for the structural unit 32 including the conductor layer and the insulation layer, the insulation layer in the structural unit 32 may replace the insulation medium in the spacing 3a. In other words, the structural unit 32 including the conductor layer and the insulation layer may be connected to the conductive substrate 31, and there may be no spacing between the structural unit 32 and the conductive substrate 31. It may be understood that, based on a product requirement, there may also be a spacing between the structural unit 32 including the conductor layer and the insulation layer and the conductive substrate 31, and an insulation medium may be additionally filled in the spacing.

In this embodiment, the insulation medium (for example, the insulation medium that is distributed discretely) may also be referred to as an insulation support, and the insulation support is configured to connect the structural unit 32 and the conductive substrate 31 and isolate the structural unit 32 from the conductive substrate 31. When there is no insulation medium and the structural unit 32 includes the insulation layer and the conductive layer, the insulation layer in the structural unit 32 may also be referred to as an insulation support, and the structural unit 32 is connected to the conductive substrate 31 through the insulation support, and is isolated from the conductive substrate 31.

As shown in FIG. 12, all structural units 32 may be sequentially distributed at intervals in an axial direction of the conductive substrate 31, a slot may be formed between every two adjacent structural units 32 (where one of the structural units 32 may be referred to as a first structural unit, and the other one of the structural units 32 may be referred to as a second structural unit), and the slot encircles the conductive substrate 31 once. The insulation medium may be distributed in the slot, or may not be distributed in the slot. Each structural unit 32 has conductivity, so that the slot can substantially form a capacitor, which may be referred to as a first capacitor 32a. Structural units 32 on two sides of the first capacitor 32a may be used as plates of the first capacitor 32a. When the insulation medium is distributed in the slot, the insulation medium in the slot may also be used as a component of the first capacitor 32a.

As shown in FIG. 12 and FIG. 13, the first capacitor 32a may include a first part 32b, a second part 32c, a third part 32d, and a fourth part 32e, and the four regions are sequentially connected end to end. The first part 32b and the third part 32d may be centrally symmetrical, and a symmetric center of the first part 32b and the third part 32d may be an axis of the conductive substrate 31. The first part 32b and the third part 32d are centrally symmetrically distributed. This means that structures of the first part 32b and the third part 32d are consistent (that the structures are consistent includes that distribution of insulation media in the two regions is also consistent), and one of the first part 32b and the third part 32d overlaps the other one after being rotated around the symmetric center by 180 degrees. The second part 32c and the fourth part 32e may be centrally symmetrical, and a symmetric center of the second part 32c and the fourth part 32e may be the axis of the conductive substrate 31. The second part 32c and the fourth part 32e are centrally symmetrically distributed. This means that structures of the second part 32c and the fourth part 32e are consistent (that the structures are consistent includes that distribution of insulation media in the two regions is also consistent), and one of the second part 32c and the fourth part 32e overlaps the other one after being rotated around the symmetric center by 180 degrees.

In this embodiment, a capacitance value C of the first capacitor 32a satisfies a capacitance formula: C=εS/d, where ε is a dielectric constant of a medium between plates, S is a plate area, and d is a distance between the plates. The plates are the structural units 32 on two sides of the first capacitor 32a, the medium between the plates is the insulation medium (in a case in which the insulation medium is distributed in the slot between the structural units 32) or air (in a case in which the insulation medium does not exist in the slot between the structural units 32), S is a facing area of the adjacent structural units 32, and d is a slot width.

In this embodiment, because the first part 32b and the third part 32d are centrally symmetrically distributed, it can be learned from the foregoing capacitance formula that capacitance values of the first part 32b and the third part 32d are equal. Similarly, because the second part 32c and the fourth part 32e are centrally symmetrically distributed, capacitance values of the second part 32c and the fourth part 32e are equal. The following continues to describe features of the first capacitor 32a by using the first part 32b and the second part 32c as description objects.

As shown in FIG. 12, a slot corresponding to the first part 32b may have a uniform width. To be specific, two sides of the slot of the first part 32b are basically parallel, and slot widths at various positions of the first part 32b may be consistent, or the slot of the first part 32b is considered to have a same width. A slot corresponding to the second part 32c may have a non-uniform width. To be specific, two sides of the slot of the second part 32c are not parallel, and slot widths at various positions of the second part 32c are inconsistent, or the slot of the second part 32c is considered to have a variable width. For example, two sides of the slot of the second part 32c may be curves (for example, arcs), slot widths at two ends of the second part 32c may be small, slot widths in a middle part between the two ends may be large, and the slot widths may gradually change from the two ends to the middle part. Therefore, the slot widths at various positions of the second part 32c are inconsistent.

As shown in FIG. 12, a maximum slot width (that is, a slot width at any position of the first part 32b) of the first part 32b may be less than or equal to a minimum slot width (for example, a slot width at a position of connecting the second part 32c and the first part 32b) of the second part 32c. In other words, from a perspective of the whole, a slot width of the first part 32b is less than a slot width of the second part 32c. Therefore, it can be learned from the foregoing capacitance formula that the capacitance value of the first part 32b is greater than the capacitance value of the second part 32c.

In conclusion, in the first capacitor 32a, the slot width of the first part 32b=a slot width of the third part 32d<the slot width of the second part 32c=a slot width of the fourth part 32e, and the capacitance value of the first part 32b=the capacitance value of the third part 32d>the capacitance value of the second part 32c=the capacitance value of the fourth part 32e. In other words, slot widths of different regions of the first capacitor 32a are different, and therefore, capacitance values of the different regions of the first capacitor 32a are different.

In the implementation shown in FIG. 12, shapes of all the structural units 32 may be consistent and the structural units 32 are evenly distributed at intervals, so that shapes of all slots are also consistent and the slots are evenly distributed at intervals. A structure layer 33 formed in this way may be considered to be of a periodic structure.

In another implementation, the shapes of all the structural units 32 may be not totally the same (this means that shapes of any two structural units 32 are different, or at least two structural units 32 are of a same shape, but not all the structural units 32 are of a same shape), and/or all the structural units 32 may not be evenly distributed at intervals (this means that for all slots between the structural units 32, any two slots are of different shapes; or at least two slots are of a same shape, but not all the slots are of a same shape). In this way, shapes of all the slots are not totally consistent and/or the slots are not evenly distributed at intervals, and a structure layer formed in this way may be considered to be of a quasi-periodic structure. For example, the quasi-periodic structure may be a structure obtained by deleting a plurality of structural units from the periodic structure. The structure layer of the quasi-periodic structure can adapt to an appearance structure of the conductive substrate 31. For example, if there is a protrusion at a position on an outer surface of the conductive substrate 31, the structure layer may avoid the protrusion at the position, to form the quasi-periodic structure.

The following describes an electromagnetic stealth principle of the antenna conductive component 3.

FIG. 12 and FIG. 13 further show a relationship between a wave source and the antenna conductive component 3. The wave source is a source of an electromagnetic wave. For a radiation process of the second antenna array 2B, the wave source is the second antenna array 2B. For a receiving process of the second antenna array 2B, the wave source may be understood as an air environment. As shown in FIG. 12 and FIG. 13, in a KEH three-coordinate system, K represents a propagation direction of the electromagnetic wave, E represents an electric field direction, and H represents a magnetic field direction. An origin of the coordinate system may represent a position of the wave source.

With reference to FIG. 12 and FIG. 13, for example, the narrower first part 32b may be closest to the wave source, and the narrower third part 32d may be farthest from the wave source. When the electromagnetic wave is propagated to the first part 32b in the direction K, a propagation direction of the electromagnetic wave K changes, and the electromagnetic wave is constrained in a slot to be propagated in an extension direction of the slot. Starting from the first part 32b, the electromagnetic wave may be divided into two paths for propagation. One path of the electromagnetic wave is propagated along a path of the first part 32b, the second part 32c, and the third part 32d, and the other path of the electromagnetic wave is propagated along a path of the first part 32b, the fourth part 32e, and the third part 32d. When propagated to the third part 32d, the two paths of electromagnetic waves are emitted out of the third part 32d in the propagation direction K.

In this embodiment, as shown in FIG. 13, the first part 32b may receive the electromagnetic wave of the wave source, the third part 32d may emit the electromagnetic wave, and the first part 32b and the third part 32d are equivalent to patch antennas. The second part 32c and the fourth part 32e may constrain the electromagnetic wave in the second part 32c and the fourth part 32e for transmission, and the second part 32c and the fourth part 32e may be equivalent to slot transmission lines (slotline).

It can be learned that the first capacitor 32a is configured to change the propagation direction of the electromagnetic wave emitted from the wave source, and constrain the electromagnetic wave to be propagated in the first capacitor 32a, so that the electromagnetic wave can be propagated around the antenna conductive component 3, and a propagation direction of the electromagnetic wave when the electromagnetic wave is emitted out of the first capacitor 32a can remain unchanged. Therefore, even though the antenna conductive component 3 blocks the wave source, because of the existence of the first capacitor 32a, the electromagnetic wave can bypass the antenna conductive component 3 and be propagated to a back side of the antenna conductive component 3, so that an electromagnetic shadow is reduced or eliminated. In addition, because the propagation direction of the electromagnetic wave may not be changed, it can be ensured that a propagation characteristic of the electromagnetic wave remains unchanged.

Therefore, in the antenna conductive component 3 in this embodiment, the at least two structural units 32 are disposed on a periphery of the conductive substrate 31, and the first capacitor 32a is formed, so that the conductive substrate 31 has electromagnetic stealth performance relative to the electromagnetic wave, to avoid or reduce blocking of the conductive substrate 31 on the electromagnetic wave.

In this embodiment, because capacitance values of different regions of the first capacitor 32a are different, electromagnetic wave signals of different frequency bands can all resonate in a slot based on respective electrical lengths of the electromagnetic wave signals, so that the electromagnetic waves of the different frequency bands can all pass through the slot. In other words, the capacitance values of the different regions of the first capacitor 32a are different, so that electromagnetic waves of a plurality of frequency bands can be allowed to pass through the slot, to expand a stealth bandwidth.

According to the foregoing principle descriptions, it is easy to understand that, as long as one first capacitor 32a exists in the antenna conductive component 3, blocking of the conductive substrate 31 on the electromagnetic wave can be mitigated, and the stealth bandwidth can be expanded. Certainly, based on an actual requirement, there may be a plurality of first capacitors 32a.

In this embodiment, a design in which a capacitance value of the first part 32b close to the wave source is large can meet propagation requirements of electromagnetic waves of some frequency bands. However, this is not a limitation on embodiments of this application. In another embodiment, a correspondence between a capacitance value of each region of the first capacitor 32a and a distance from each region of the first capacitor 32a to the wave source may be designed based on a requirement, and is not limited to the foregoing descriptions. For example, for electromagnetic waves of some frequency bands, a region that is close to the wave source in the first capacitor 32a may have a small capacitance value.

In this embodiment, the slot of the first part 32b close to the wave source has a uniform width, and the slot of the second part 32c slightly far away from the wave source has a non-uniform width. This is merely an example, and is not a limitation on embodiments of this application. For example, the slot of the first part 32b close to the wave source may alternatively have a non-uniform width, the slot of the second part 32c slightly far away from the wave source has a uniform width, and the maximum slot width of the first part 32b is less than or equal to the minimum slot width (that is, a slot width at any position of the second part 32c) of the second part 32c, so that the capacitance value of the first part 32b is greater than the capacitance value of the second part 32c.

In this embodiment, the first capacitor 32a is divided into four parts based on a width change of the slot. This is merely an example, and is not a limitation on embodiments of this application. The width change of the slot may be further designed, to obtain another quantity of parts from the first capacitor 32a through division. Actually, based on a product requirement, provided that the slot in embodiments of this application is not a constant-width slot, in this way, the stealth bandwidth can be expanded.

In this embodiment, the first part 32b and the third part 32d are centrally symmetrical, and the second part 32c and the fourth part 32e are centrally symmetrical. This design can ensure that after the electromagnetic wave is emitted out of the first capacitor 32a, a previous propagation direction and propagation characteristic (such as a polarization characteristic and a frequency band) can be maintained. However, this design is merely an example, and is not intended to limit embodiments of this application. For example, the first part 32b and the third part 32d may be only of a same shape, but are not required to be centrally symmetrical in position. In this way, although the propagation direction and the propagation characteristic of the electromagnetic wave are changed, reciprocity of an antenna signal can be satisfied, and the electromagnetic wave emitted out of the first capacitor 32a may be refracted to another direction, to further expand a signal scanning range of the second antenna array 2B (for example, this solution may be applied to a multiple-input multiple-output MIMO antenna). Alternatively, the first part 32b and the third part 32d may be of different shapes, and are not required to be centrally symmetrical in position.

The foregoing describes a principle of the electromagnetic stealth design in detail. The following describes a specific application of the electromagnetic stealth design in the base station antenna 2 with reference to FIG. 4.

As shown in FIG. 4 and described above, the antenna conductive component 3 in the base station antenna 2 may be the feeding network covered with the structure layer 33. The antenna conductive component 3 blocks the second antenna array 2B to some extent. However, because the structure layer 33 is disposed, an electromagnetic wave radiated by the second antenna array 2B bypasses the antenna conductive component 3 and continues being propagated, or the electromagnetic wave bypasses the antenna conductive component 3 and is received by the second antenna array 2B, so that an electromagnetic shadow can be reduced or eliminated. Therefore, the second antenna array 2B may have a large-angle scanning capability, and a dimension (for example, a dimension in a horizontal direction in FIG. 4) of the second antenna array 2B may be extended without being blocked or limited by a feeding network of a front-facing first antenna.

Different from the foregoing embodiment, as shown in FIG. 14, in another embodiment, a conductive substrate 41 of an antenna conductive component 4 may be approximately a rectangular column structure. A structural unit 42 may be approximately a square tubular structure formed by four flat plates. A first capacitor between adjacent structural units 42 may include a first part 42b and a second part 42c. The first part 42b may be located on a periphery of one side face of the conductive substrate 41, the second part 42c may be located on a periphery of another side face of the conductive substrate 41, and a position of connecting the first part 42b and the second part 42c may be corresponding to an edge of the conductive substrate 41.

As shown in FIG. 14, for example, both the first part 42b and the second part 42c may be rectangular regions, and each of a slot of the first part 42b and a slot of the second part 42c has a uniform width. A slot width of the first part 42b may be less than a slot width of the second part 42c. It may be understood that, the first capacitor between the structural units 42 may further include a third part and a fourth part (not shown due to a view angle of FIG. 14). The third part and the first part 42b may be centrally symmetrical, and the fourth part and the second part 42c may be centrally symmetrical.

In this embodiment, because the slot width of the first part 42b is less than the slot width of the second part 42c, according to the foregoing capacitance formula, a capacitance value of the first part 42b is greater than a capacitance value of the second part 42c. In other words, slot widths of different regions of the first capacitor are different, and therefore, capacitance values of the different regions of the first capacitor are different.

As shown in FIG. 14, for example, a propagation direction K of an electromagnetic wave may be perpendicular to the side face on which the first part 42b of the antenna conductive component 4 is located, but the solution of this embodiment is not limited thereto. For example, the side face on which the first part 42b is located may alternatively be not perpendicular to the propagation direction K.

The solution in this embodiment enables the conductive substrate 41 to have electromagnetic stealth performance relative to the electromagnetic wave, to avoid or reduce blocking of the conductive substrate 41 on the electromagnetic wave, and further expand a stealth bandwidth. In addition, a structure of a slot on the antenna conductive component 4 is simple, mass production performance is good, and a specific product requirement can be met.

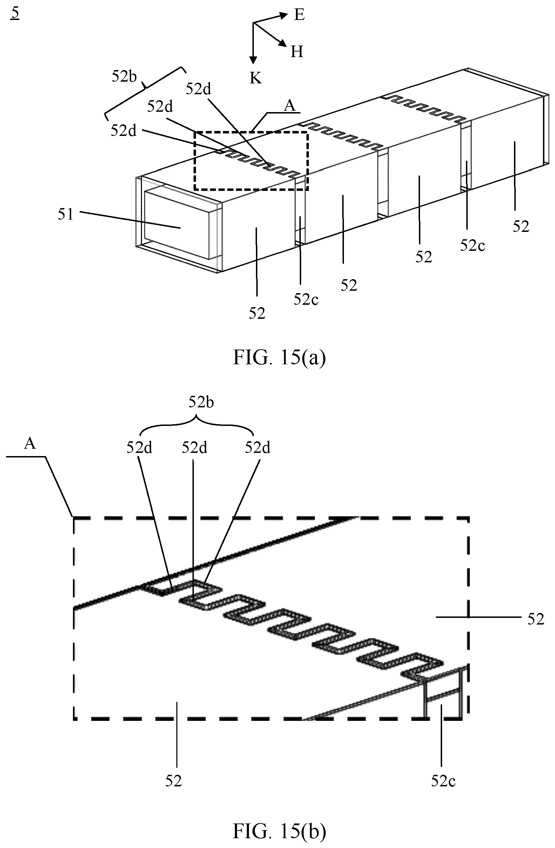

Different from the embodiment shown in FIG. 14, as shown in FIG. 15(a) and FIG. 15(b), in another embodiment, a first capacitor between adjacent structural units 52 of an antenna conductive component 5 may include a first part 52b and a second part 52c. A slot of the first part 52b may be formed by bending and connecting at least two sub-slots 52d sequentially. To be specific, a plurality of sub-slots 52d are connected sequentially, and every two adjacent sub-slots 52d form a bending angle. The bending angle between the sub-slots 52d may be designed based on a requirement, for example, may be 90°. Such a slot of the first part 52b may form a shape similar to a square wave. In another implementation, the bending angle between the adjacent sub-slots 52d may not be limited to 90°, so that the slot of the first part 52b forms another shape, for example, a curve shape (such as a sine curve or a parabola).

As shown in FIG. 15(b), each sub-slot 52d may have a uniform width, and widths of all sub-slots 52d are the same. Therefore, the width of the sub-slot 52d is also a slot width d1 of the first part 52b. A slot of the second part 52c has a uniform width, and a slot width d2 of the second part 52c may be greater than the slot width of the first part 52b.

In this embodiment, a total slot length formed by connecting all sub-slots 52d in the first part 52b may be greater than a slot length of the second part 52c. For the foregoing capacitance formula C=εS/d (ε is a dielectric constant of a medium between plates, S is a plate area, and d is a distance between the plates), because the slot length of the first part 52b is large, a plate area S1 of the first part 52b is large (where a slot depth of the first part 52b is consistent with a slot depth of the second part 52c). Because the slot length of the second part 52c is small, a plate area S2 of the first part 52b is small.

In this embodiment, for the first part 52b and the second part 52c, (S1/d1)>(S2/d2), so that a capacitance value C1 of the first part 52b is greater than a capacitance value C2 of the second part 52c. In other words, in this embodiment, slot lengths and slot widths of the different regions of the first capacitor may be configured, so that the capacitance values of the different regions of the first capacitor are different.

The solution in this embodiment enables the conductive substrate 51 to have electromagnetic stealth performance relative to the electromagnetic wave, to avoid or reduce blocking of the conductive substrate 41 on the electromagnetic wave, and further expand a stealth bandwidth.

The solution of this embodiment may be applied to the following scenario: When a first part of a regular shape (for example, a rectangular shape) whose slot width is less than a threshold cannot be manufactured due to a limitation of a manufacturing process, it may be considered that the first part is designed as the first part 52b (the first part 52b may be considered as an irregular shape) shown in FIG. 15(a), and a slot length is increased to compensate for a process limitation that a slot width cannot be made smaller, so that the first part has a large capacitance value. Therefore, the design of this embodiment can match an existing manufacturing process, and mass production performance is good.

In another embodiment, a solution different from the embodiment shown in FIG. 15(a) may be used, provided that (S1/d1)>(S2/d2) is ensured so that the capacitance value of the first part is greater than the capacitance value of the second part.

For example, in an implementation, the first part may be formed by bending and connecting at least two sub-slots sequentially. The slot length of the first part is greater than the slot length of the second part, each sub-slot has a uniform width, widths of all sub-slots are consistent, the slot of the second part has a uniform width, and the slot width of the second part is equal to the slot width of the first part.

Alternatively, in another implementation, the first part may be formed by bending and connecting at least two sub-slots sequentially. The slot length of the first part is greater than the slot length of the second part, but a width of the sub-slot is not limited (for example, the sub-slot may have a non-uniform slot, and widths of sub-slots are not totally the same). The slot width of the second part is not limited either (for example, the slot of the second part may have a non-uniform width, and a value relationship between the slot width of the second part and the width of the sub-slot is not limited).

Alternatively, in another implementation, the first part may be formed by bending and connecting at least two sub-slots sequentially, and the second part may also be formed by bending and connecting at least two sub-slots sequentially. This is not limited herein.

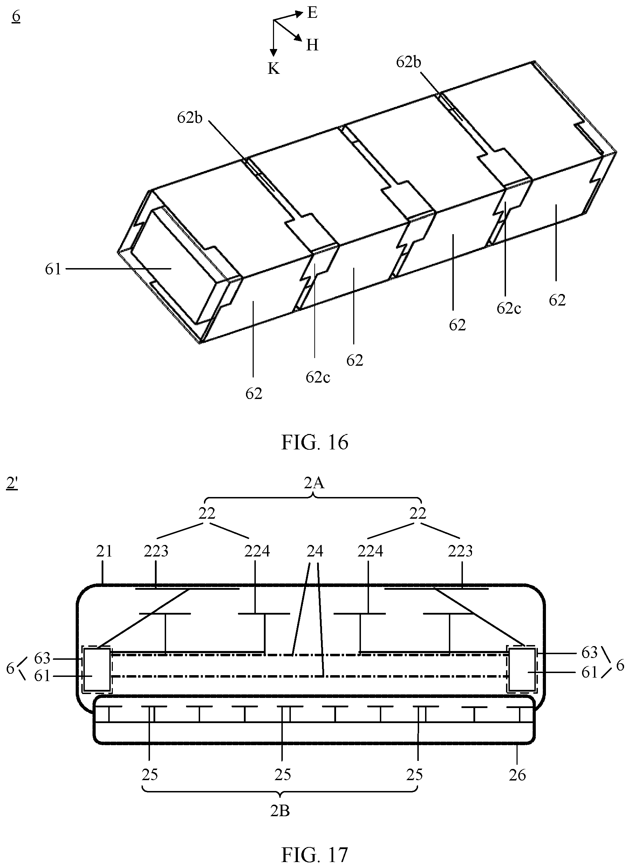

Different from the embodiment shown in FIG. 14, as shown in FIG. 16, in another embodiment, a first capacitor between adjacent structural units 62 of an antenna conductive component 6 may include a first part 62b and a second part 62c. The second part 62c may cross an edge of the conductive substrate 61, and may be distributed on a periphery of two adjacent side faces of the conductive substrate 61. To be specific, a part of the second part 62c is located on one side face, the other part of the second part 62c is located on the other side face, and the two parts of the second part 62c are bent and connected. The first part 62b may cross another edge of the conductive substrate 61, and may be distributed on a periphery of two adjacent side faces of the conductive substrate 61 (the complete first part 62b is not shown due to a view angle in FIG. 16). In addition, a propagation direction K of an electromagnetic wave is not perpendicular to any side face of the antenna conductive component 6.

The solution in this embodiment enables the conductive substrate 61 to have electromagnetic stealth performance relative to the electromagnetic wave, to avoid or reduce blocking of the conductive substrate 61 on the electromagnetic wave, and further expand a stealth bandwidth. In addition, a structure of a slot on the antenna conductive component 6 is simple, mass production performance is good, and a specific product requirement can be met. The following describes a specific application of the solution shown in FIG. 16.

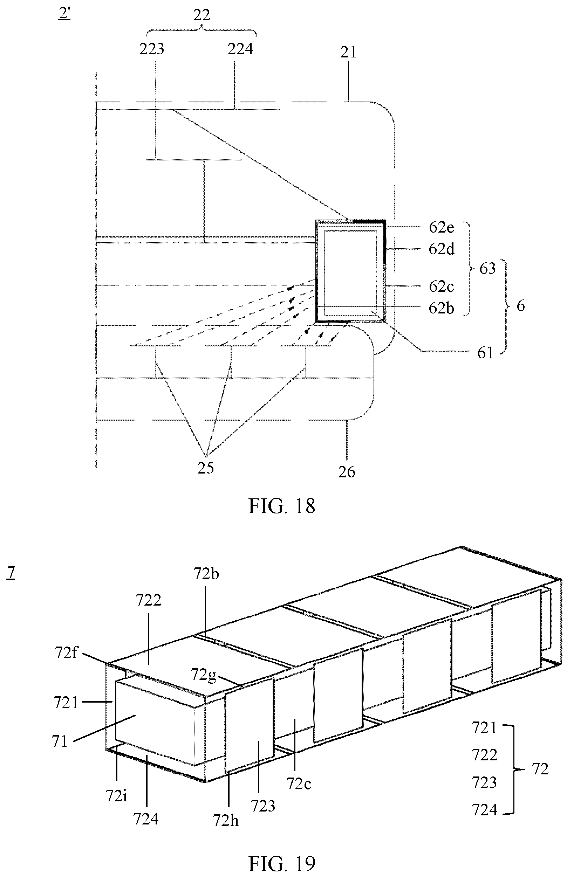

FIG. 17 and FIG. 18 show a specific application of an electromagnetic stealth design shown in FIG. 16 in a base station antenna 2'. To highlight a focus, FIG. 18 shows only a right-side part of the base station antenna 2' in FIG. 17 in an enlarged manner.

As shown in FIG. 17 and FIG. 18, the base station antenna 2' may include a first antenna and a second antenna that are arranged in a stacked manner.

As shown in FIG. 17, the first antenna may include a first radome 21, a first antenna array 2A, a frequency selective surface 24, and an antenna conductive component 6. A first radiating element 22 of the first antenna array 2A may include a radiating element 223 and a radiating element 224, and there may be a plurality of radiating elements 223 and radiating elements 224. Operating frequency bands of the radiating element 223 and the radiating element 224 may be different. For example, the operating frequency band of the radiating element 223 may range from 690 MHz to 960 MHz, and the operating frequency band of the radiating element 224 may range from 1427 MHz to 2690 MHz. Both the radiating element 223 and the radiating element 224 may be connected to respective feeding networks of the radiating element 223 and the radiating element 224. There may be, for example, two layers of frequency selective surfaces 24. The antenna conductive component 6 and the first antenna array 2A may be located on a same side of an array surface of a second antenna array 2B (which is described below). For example, a conductive substrate 61 in the antenna conductive component 6 may be a phase shifter in the feeding network, and a structure layer 63 in the antenna conductive component 6 is disposed outside the phase shifter. As shown in FIG. 18, a first capacitor in the structure layer 63 includes a first part 62b, a second part 62c, a third part 62d, and a fourth part 62e. For example, the first part 62b and the third part 62d are centrally symmetrical, and the second part 62c and the fourth part 62e are centrally symmetrical.

As shown in FIG. 17, a second antenna may include a second radome 26 and the second antenna array 2B. An operating frequency band of a second radiating element 25 of the second antenna array 2B may range from 3.3 GHz to 3.8 GHz. It may be understood that another component, for example, a feeding network connected to the second radiating element 25, may be further disposed in the second radome 26.

As shown in FIG. 18, for example, the second radiating element 25 in the second antenna array 2B is used as a wave source. The second radiating element 25 is closest to the first part 62b. An electromagnetic wave radiated by the second radiating element 25 is approximately propagated to two adjacent side faces of the antenna conductive component 6 in a "sloping direction", so that the first part 62b is distributed on the two side faces, convenient for the first part 62b to receive the electromagnetic wave and constrain the electromagnetic wave to be propagated in the first capacitor, and finally the electromagnetic wave is emitted out of the third part 62d. Because the first part 62b is distributed in a form of "cross an edge of the phase shifter", the second part 62c, the third part 62d, and the fourth part 62e are also distributed in the form of "cross an edge of the phase shifter". It can be learned that, regions that are of different capacitance values and that are of the first capacitor are all distributed on two adjacent side faces of the phase shifter, so that a position of the wave source can be matched, to implement a good electromagnetic stealth effect.

Same as the embodiment shown in FIG. 14, as shown in FIG. 19, in another embodiment, an antenna conductive component 7 includes a conductive substrate 71 and at least two structural units 72, a first capacitor is formed between adjacent structural units 72, and the first capacitor may include a first part 72b and a second part 72c.

Different from the embodiment shown in FIG. 14, as shown in FIG. 19, the structural unit 72 in this embodiment is not an integrated structure, but has a coupling slot inside. Parts of the structural unit 72 located on two sides of the coupling slot are completely separated and not connected, and the parts located on the two sides of the coupling slot may be coupled via the coupling slot. For example, the structural unit 72 may include a first part 721, a second part 722, a third part 723, and a fourth part 724, and the four parts may be respectively located on different side faces of the conductive substrate 71. There is a coupling slot 72f between the first part 721 and the second part 722, there is a coupling slot 72g between the second part 722 and the third part 723, there is a coupling slot 72h between the third part 723 and the fourth part 724, and there is a coupling slot 72i between the fourth part 724 and the first part 721. The foregoing four coupling slots may divide the structural unit 72 into the four independent parts. When an electromagnetic wave is propagated to the structural unit 72, the electromagnetic wave may "cross" these coupling slots. Therefore, parts in the structural unit 72 that are located on two sides of the coupling slots are coupled via the coupling slots.

As shown in FIG. 19, for example, each coupling slot extends along an edge of the conductive substrate 71. The structural unit 72 has four coupling slots, and the four coupling slots divide the structural unit 72 into four independent parts. The foregoing is merely an example, and is not intended to limit embodiments. Based on a product requirement, a position and an extension direction of the coupling slot may be flexibly designed, and there may be at least one coupling slot. In addition, each of structural units 72 may have coupling slots, or only some structural units 72 may have coupling slots.

In this embodiment, the coupling slot is formed in the structural unit 72, so that different parts of the structural unit 72 are sequentially assembled on the conductive substrate 71, and finally assembled into a complete structural unit 72. In this way, reliable assembly of the structural unit 72 can be implemented in some scenarios. Especially when a size of the conductive substrate 71 is large and a quantity of structural units 72 is large, an assembly process can be simplified in a split assembly manner, and an assembly yield is improved. In addition, the coupling slot can allow electromagnetic waves of some frequency bands to pass through, so that the antenna conductive component 7 has a function of expanding a stealth bandwidth to some extent.

It may be understood that a coupling slot design in this embodiment may be applied to any other embodiment of this application as needed.

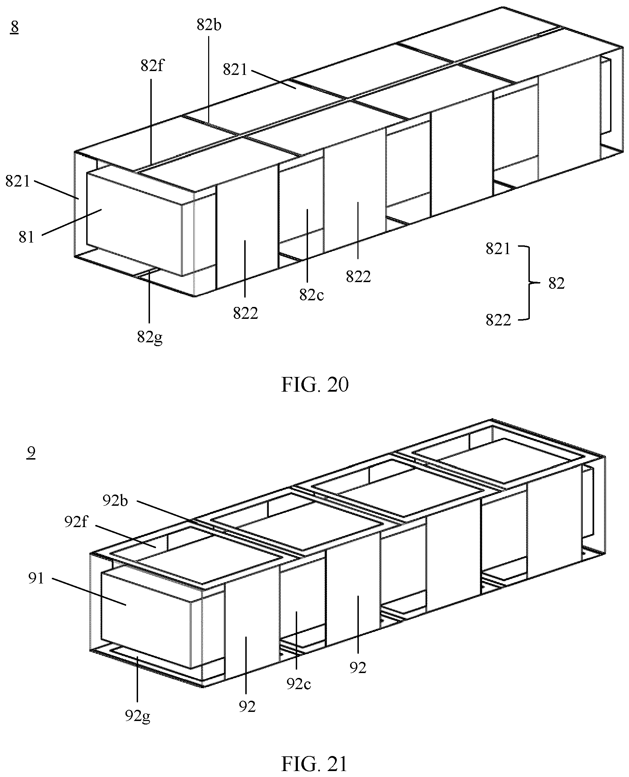

Same as the embodiment shown in FIG. 19, as shown in FIG. 20, in another embodiment, an antenna conductive component 8 includes a conductive substrate 81 and at least two structural units 82, a first capacitor is formed between adjacent structural units 82, and the first capacitor may include a first part 82b and a second part 82c. The structural unit 82 is not an integrated structure, but has a coupling slot inside. Parts of the structural unit 82 located on two sides of the coupling slot are completely separated and not connected, and the parts located on the two sides of the coupling slot may be coupled via the coupling slot.

Different from the embodiment shown in FIG. 19, as shown in FIG. 20, the structural unit 82 in this embodiment may have a coupling slot 82f and a coupling slot 82g, and the coupling slot 82f and the coupling slot 82g may be respectively located on two opposite sides of the structural unit 82. For example, both the coupling slot 82f and the coupling slot 82g may be approximately in the middle of the side face of the structural unit 82, but not at an edge of the structural unit 82. The coupling slot 82f and the coupling slot 82g may divide the structural unit 82 into a first part 821 and a second part 822, and both the first part 821 and the second part 822 may be approximately in a C-shaped structure. For example, a structure layer in this embodiment may have a periodic structure. Therefore, coupling slots on a same side of all structural units 82 may be collinear.

In this embodiment, the coupling slot is formed in the structural unit 82, so that different parts of the structural unit 82 are sequentially assembled on the conductive substrate 81, and finally assembled into a complete structural unit 82. In this way, reliable assembly of the structural unit 82 can be implemented in some scenarios. Especially when a size of the conductive substrate 81 is large and a quantity of structural units 82 is large, an assembly process can be simplified in a split assembly manner, and an assembly yield is improved. Because a quantity of components of the structural unit 82 is small, an assembly process may be simplified to some extent. In addition, the coupling slot can allow electromagnetic waves of some frequency bands to pass through, so that the antenna conductive component 8 has a function of expanding a stealth bandwidth to some extent.

It may be understood that a coupling slot design in this embodiment may be applied to any other embodiment of this application as needed, including embodiments to be described below.

Same as the embodiment shown in FIG. 14, as shown in FIG. 21, in another embodiment, an antenna conductive component 9 includes a conductive substrate 91 and at least two structural units 92, a first capacitor is formed between adjacent structural units 92, and the first capacitor may include a first part 92b and a second part 92c.

Different from the embodiment shown in FIG. 14, as shown in FIG. 21, a local region of each structural unit 92 may be hollowed out to form a hollow region. For example, two opposite side faces of each structural unit 92 may form a hollow, and a hollow region 92f and a hollow region 92g are respectively formed. In another implementation, positions and a quantity of hollow regions may be designed based on a product requirement, which is not limited to that shown in FIG. 15. For example, the hollow region needs to be formed only on at least one structural unit 92.

In this embodiment, the hollow region is formed on the structural unit 92. This can reduce a weight and help reduce a weight of the antenna conductive component 9. Especially when the structural unit 92 is a heavy metal member, providing the hollow region can greatly reduce the weight. In addition, when an electromagnetic wave is propagated to a place near the antenna conductive component 9, an electromagnetic field is mainly distributed at the first capacitor, and an electromagnetic field in a remaining region is very weak. Therefore, providing the hollow region basically does not affect a propagation characteristic of the electromagnetic wave.

It may be understood that a hollow-out design in this embodiment may be applied to any other embodiment of this application, including embodiments to be described below.

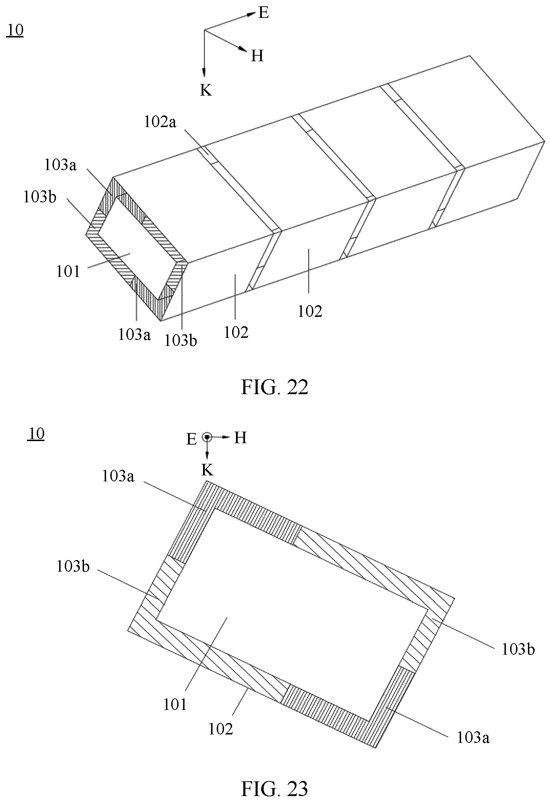

Same as the foregoing embodiments, in an embodiment shown in FIG. 22, an antenna conductive component 10 may include a conductive substrate 101 and at least two structural units 102, and a first capacitor 102a is formed between adjacent structural units 102.

Different from the foregoing embodiments, the first capacitor 102a in FIG. 22 may have a uniform slot width, in other words, slot widths at various positions of the first capacitor 102a may be consistent. In addition, an insulation medium may be filled between the structural unit 102 and the conductive substrate 101, and the insulation medium may cover, for example, an entire outer circumferential surface of the conductive substrate 101. The insulation medium may include a first insulation medium 103a and a second insulation medium 103b, and a dielectric constant of the first insulation medium 103a may be greater than a dielectric constant of the second insulation medium 103b. For example, the first insulation medium 103a and the second insulation medium 103b may extend from one end of the conductive substrate 101 to the other end in a length direction of the conductive substrate 101, and the first insulation medium 103a and the second insulation medium 103b may be alternately arranged in a circumferential direction of the conductive substrate 101, to form an arrangement manner shown in FIG. 23: the first insulation medium 103a-the second insulation medium 103b-the first insulation medium 103a-the second insulation medium 103b. The first insulation medium 103a may be distributed on two adjacent side faces of the conductive substrate 101, and the second insulation medium 103b may also be distributed on two adjacent side faces of the conductive substrate 101. Both the first insulation medium 103a and the second insulation medium 103b may cross an edge of the conductive substrate 101.

As shown in FIG. 22 and FIG. 23, in this embodiment, a first part, a second part, a third part, and a fourth part may be defined in the first capacitor 102a. The first part is closest to a wave source, and the first part is filled with the first insulation medium 103a. The second part is adjacent to the first part, and the second part is filled with the second insulation medium 103b. The third part is opposite to the first part (for example, the third part and the first part may be centrally symmetrical), and the third part is filled with the first insulation medium 103a. The fourth part is opposite to the second part (for example, the fourth part and the second part may be centrally symmetrical), and the fourth part is filled with the second insulation medium 103b.

According to the foregoing capacitance formula C=εS/d (ε is a dielectric constant of a medium between plates, S is a plate area, and d is a distance between the plates), for each region of the first capacitor 102a, when S and d are consistent, because a dielectric constant of the first insulation medium 103a in the first part is large, a capacitance value of the first part is large. Because a dielectric constant of the second insulation medium 103b in the second part is small, a capacitance value of the first part is small. A capacitance value of the third part may be equal to the capacitance value of the first part, and a capacitance value of the fourth part may be equal to the capacitance value of the second part. Therefore, in this embodiment, the first capacitor 102a may have a uniform slot width, and insulation media with different dielectric constants are filled in different regions of the first capacitor 102a, so that capacitance values of the different regions of the first capacitor 102a are different.

The solution in this embodiment enables the conductive substrate 101 to have electromagnetic stealth performance relative to an electromagnetic wave, to avoid or reduce blocking of the conductive substrate 101 on the electromagnetic wave, and further expand a stealth bandwidth. In addition, as shown in FIG. 22 and FIG. 23, a propagation direction K of the electromagnetic wave may not be perpendicular to any side face of the antenna conductive component 10. This design enables the antenna conductive component 10 to be used in the base station antenna 2' shown in FIG. 12. Regions that are of different capacitance values and that are of the first capacitor 102a are all distributed on two adjacent side faces of a phase shifter, so that a position of the wave source can be matched, to implement a good electromagnetic stealth effect. A detailed principle is described above, and is not repeated herein.

It may be understood that, in this embodiment, a design in which capacitance values of different regions are different is implemented by filling insulation media with different dielectric constants, and may be applied to any other embodiment of this application as needed. For example, a slot size (including a width size, a length size, and the like), a slot pattern (which means that the slot is an entire slot, or is formed by bending and connecting a plurality of sub-slots sequentially shown in FIG. 15(a)), and slot distribution (which means that the slot is distributed only on one side face of the conductive substrate or distributed on two adjacent side faces) of the first capacitor may not be limited, and insulation media with different dielectric constants are filled in different regions of the first capacitor. A shape size, a position size, and the dielectric constant of the insulation medium of the slot are comprehensively configured, so that the capacitance value of the first part is finally greater than the capacitance value of the second part.

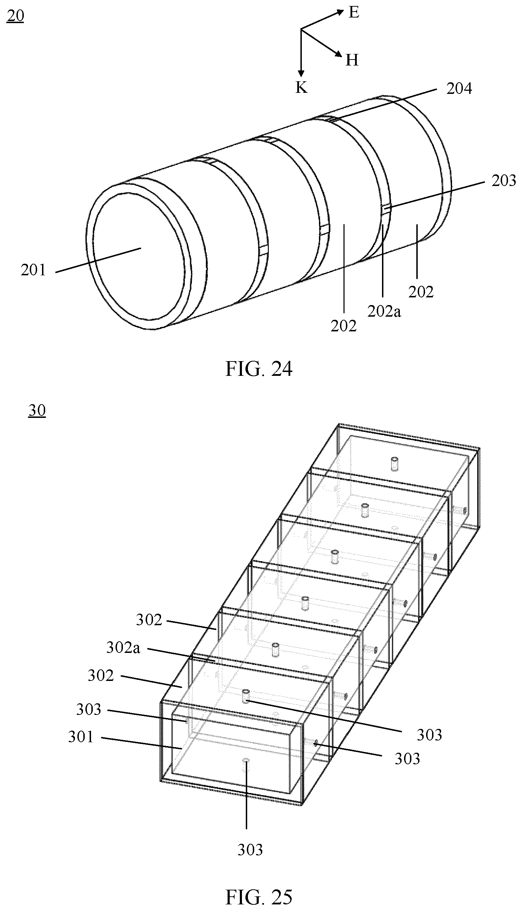

Same as the embodiment shown in FIG. 22, in an embodiment shown in FIG. 24, an antenna conductive component 20 may include a conductive substrate 201 and at least two structural units 202, and a first capacitor 202a is formed between adjacent structural units 202.

Different from the embodiment shown in FIG. 22, as shown in FIG. 24, the first capacitor 202a may not need to be filled with an insulation medium, or may be filled with insulation media with a same dielectric constant. In addition, capacitor components with different capacitance values may be respectively mounted in different regions of the first capacitor 202a. For example, a first capacitor component 204 may be mounted in a region closest to and farthest from a wave source (due to a limitation of a view angle in FIG. 24, the first capacitor component 204 that is farthest from the wave source and located below is not displayed), and a second capacitor component 203 may be mounted in a region adj acent to the first capacitor component 204. A region in which the first capacitor component 204 is mounted may be referred to as a first part and a third part, and a region in which the second capacitor component 203 is mounted may be referred to as a second part and a fourth part. A capacitance value of the first capacitor component 204 is greater than a capacitance value of the second capacitor component 203. The first capacitor component 204 may be a capacitor component with a fixed capacitance value, or may be a capacitor component (for example, a varactor) that can change a capacitance value under signal control. The second capacitor component 203 may be a capacitor component with a fixed capacitance value, or may be a capacitor component (for example, a varactor) that can change a capacitance value under signal control. The first capacitor component 204 may also be referred to as a second capacitor, and the second capacitor component 203 may also be referred to as a third capacitor.

The first capacitor component 204 and the second capacitor component 203 may be fastened in a slot, for example, through welding. A quantity of first capacitor components 204 and a quantity of second capacitor components 203 may be determined based on a requirement. This is not limited in embodiments.

A capacitance value of each region of the first capacitor 202a may be equal to a capacitance value calculated according to the foregoing capacitance formula C=εS/d (ε is a dielectric constant of a medium between plates, S is a plate area, and d is a distance between the plates) plus a capacitance value of the capacitor component in the region. For each region of the first capacitor 202a, when ε, S, and d are consistent, capacitance values calculated according to the capacitance formula C=εS/d are equal. Because the first capacitor component 204 with a large capacitance value is disposed in the first part, the capacitance value of the first part is large; and because the second capacitor component 203 with a small capacitance value is disposed in the second part, the capacitance value of the second part is small. A capacitance value of the third part may be equal to the capacitance value of the first part, and a capacitance value of the fourth part may be equal to the capacitance value of the second part.

Therefore, in this embodiment, the first capacitor 202a has a uniform slot width, and capacitor components with different capacitance values are mounted in different regions of the first capacitor 202a, so that capacitance values of the different regions of the first capacitor 202a are different.

The solution in this embodiment enables the conductive substrate 201 to have electromagnetic stealth performance relative to an electromagnetic wave, to avoid or reduce blocking of the conductive substrate 201 on the electromagnetic wave, and further expand a stealth bandwidth. For example, when the capacitor component is a capacitor component with a variable capacitance, a capacitance of the capacitor component in a corresponding region may be adaptively adjusted based on a change of a scanning angle of a wave source, to adjust a capacitance value of the region, and ensure an electromagnetic stealth effect of the antenna conductive component 20 on the wave source.

Another variant solution can be easily obtained according to the principle of this embodiment. For example, a capacitor component (for example, the first part) may be disposed only in a part of the first capacitor 202a, and no capacitor component is disposed in another region, so that the capacitance values of the different regions of the first capacitor 202a may be different. In addition, a design in which a capacitor component is disposed in a region to affect a capacitance value of the region may be applied to any embodiment of this application based on a requirement. For example, a slot size, a slot pattern, slot distribution, an insulation medium filling status, and the like of the first capacitor may not be limited, and a capacitor component is mounted in the first capacitor. A shape size, a position size, a dielectric constant of an insulation medium, and a capacitance value of the capacitor component are comprehensively configured, so that the capacitance value of the first part is finally greater than the capacitance value of the second part.

In any one of the foregoing embodiments, a capacitor (for example, referred to as a plate capacitor) may be formed between the structural unit and the conductive substrate, and the plate capacitor may affect a frequency band of an electromagnetic wave that bypasses the antenna conductive component. For a product need (for example, a need to reduce a volume), it may be desirable to reduce a spacing between the structural unit and the conductive substrate. However, a decrease in the spacing may cause an increase in the frequency band of the electromagnetic wave that bypasses the antenna conductive component, and change a propagation characteristic of the electromagnetic wave.

In view of this, based on any one of the foregoing embodiments, the antenna conductive component may further include an inductive element. The inductive element may be disposed in the spacing between the structural unit and the conductive substrate, and connected to the structural unit and the conductive substrate, so that the structural unit is electrically connected to the conductive substrate. The inductive element and the foregoing plate capacitor may form a parallel resonant circuit, and the parallel resonant circuit can reduce the frequency band of the electromagnetic wave that bypasses the antenna conductive component. Therefore, disposing the inductive element and reducing the spacing between the structural unit and the conductive substrate may counteract each other's impact on the frequency band, so that the frequency band of the electromagnetic wave that bypasses the antenna conductive component remains unchanged, to maintain the propagation characteristic of the electromagnetic wave.

In this embodiment, the inductive element may be a conductor mechanical part, for example, a metal column. The inductive element may be equivalent to an inductor, and the inductive element facilitates mechanical processing of the antenna conductive component. Alternatively, the inductive element may be directly an inductor.

In this embodiment, a position of the inductive element may be designed based on a requirement, for example, to be at a specific distance from the first capacitor, to avoid being too close. A quantity of inductive elements may be designed based on a requirement. For example, each structural unit may be connected to the conductive substrate through at least one inductive element, or only some structural units are connected to the conductive substrate through the inductive element.

FIG. 25 shows an antenna conductive component 30 using the inductive element design in this embodiment. As shown in FIG. 25, the antenna conductive component 30 may include a conductive substrate 301 and at least two structural units 302, a first capacitor 302a is formed between adjacent structural units 302, and capacitance values of different regions of the first capacitor 302a are different. Each side face of the structural unit 302 is connected to the conductive substrate 301 through an inductive element 303, and a plurality of inductive elements 303 are disposed between each structural unit 302 and the conductive substrate 301. It may be understood that the antenna conductive component 30 shown in FIG. 25 is merely an example, and is not intended to limit an application environment of the inductive element 303.

In the foregoing embodiment, the capacitance values of the different regions of the first capacitor in the antenna conductive component are different. In the following embodiment, different from the foregoing embodiment, the capacitance values of the different regions of the first capacitor may be the same. It may be understood that the electromagnetic stealth design can also be implemented when the capacitance values of the different regions of the first capacitor are the same. The following lists several solutions in which the capacitance values of the different regions of the first capacitor are the same.

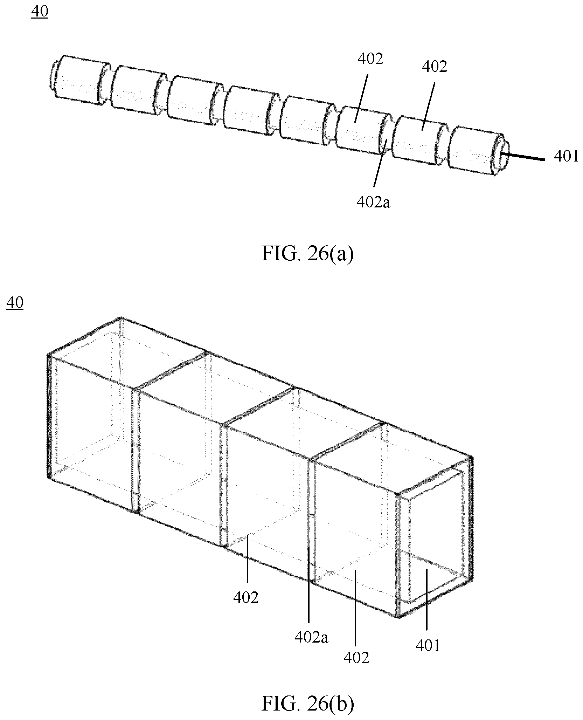

For example, in embodiments shown in FIG. 26(a) and FIG. 26(b), an antenna conductive component 40 may include a conductive substrate 401 and at least two structural units 402 that encircle a conductive substrate 401 once, and a first capacitor 402a is formed between adjacent structural units 402. The conductive substrate 401 in FIG. 26(a) may be, for example, approximately cylindrical, and the conductive substrate 401 in FIG. 26(b) may be, for example, approximately square cylindrical. Different from the foregoing embodiment, a slot between any adjacent structural units 402 may have a same width, in other words, slot widths at various positions of the slot may be consistent. Capacitance values of different regions of the first capacitor 402a may be the same.

The first capacitor 402a in this embodiment can also change a propagation direction of an electromagnetic wave emitted from a wave source, and constrain the electromagnetic wave to be propagated in the first capacitor 402a, so that the electromagnetic wave can be propagated around the antenna conductive component 40. Therefore, even though the antenna conductive component 40 blocks the wave source, because of the existence of the first capacitor 402a, the electromagnetic wave can bypass the antenna conductive component 40 and be propagated to a back side of the antenna conductive component 40, so that an electromagnetic shadow is reduced or eliminated.

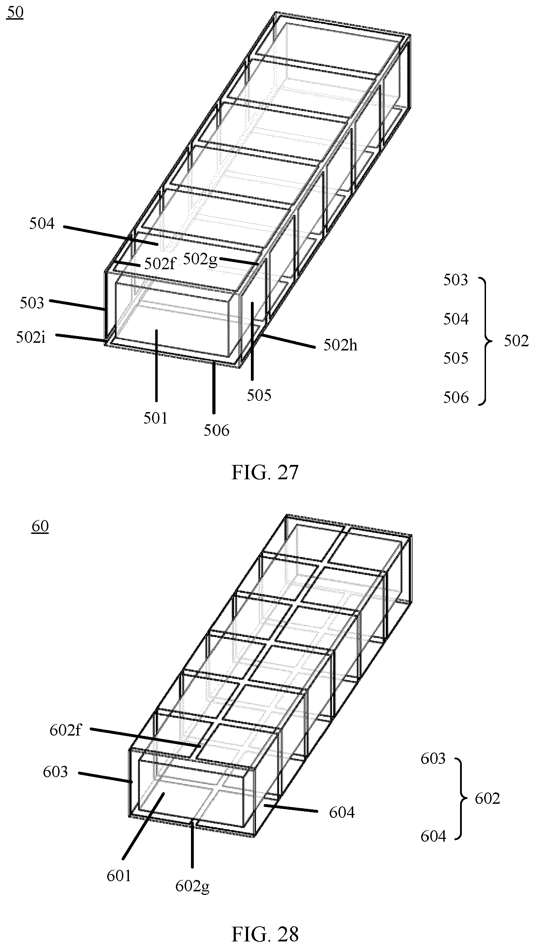

For example, in an embodiment shown in FIG. 27, the same as the embodiment shown in FIG. 19 is that an antenna conductive component 50 includes a conductive substrate 501 and at least two structural units 502, and a first capacitor is formed between adjacent structural units 502. The structural unit 502 is not an integrated structure, but has a coupling slot inside. Parts of the structural unit 502 located on two sides of the coupling slot are completely separated and not connected, and the parts located on the two sides of the coupling slot may be coupled via the coupling slot. For example, the structural unit 502 may include a first part 503, a second part 504, a third part 505, and a fourth part 506, and the four parts may be respectively located on different side faces of the conductive substrate 501. There is a coupling slot 502f between the first part 503 and the second part 504, there is a coupling slot 502g between the second part 504 and the third part 505, there is a coupling slot 502h between the third part 505 and the fourth part 506, and there is a coupling slot 502i between the fourth part 506 and the first part 503. For example, each coupling slot extends along an edge of the conductive substrate 501. The foregoing four coupling slots may divide the structural unit 502 into the four independent parts. When an electromagnetic wave is propagated to the structural unit 502, the electromagnetic wave may "cross" these coupling slots. Therefore, parts that are of the structural unit 502 and that are located on two sides of the coupling slots are coupled via the coupling slots. The foregoing is merely an example, and is not intended to limit embodiments. Based on a product requirement, a position and an extension direction of the coupling slot may be flexibly designed, and there may be at least one coupling slot. In addition, each of structural units 502 may have coupling slots, or only some structural units 502 may have coupling slots.

In the embodiment shown in FIG. 27, a difference from the embodiment shown in FIG. 19 is that a slot between any adjacent structural units 502 may have a same width, in other words, slot widths at various positions of the slot may be consistent. Capacitance values of different regions of the constructed first capacitor may be the same.

According to the embodiment shown in FIG. 27, a problem of an electromagnetic shadow can also be mitigated, and split assembly of the structural unit 502 can be implemented, so that an assembly process can be simplified and an assembly yield can be improved. In addition, the coupling slot in the antenna conductive component 50 can allow electromagnetic waves of some frequency bands to pass through, so that the antenna conductive component 50 has a function of expanding a stealth bandwidth to some extent.

For example, in an embodiment shown in FIG. 28, the same as the embodiment shown in FIG. 20 is that an antenna conductive component 60 includes a conductive substrate 601 and at least two structural units 602, and a first capacitor is formed between adjacent structural units 602. The structural unit 602 is not an integrated structure, but has a coupling slot 602f and a coupling slot 602g inside, and the coupling slot 602f and the coupling slot 602g may be respectively located on two opposite sides of the structural unit 602. For example, both the coupling slot 602f and the coupling slot 602g may be approximately in the middle of the side face of the structural unit 602, but not at an edge of the structural unit 602. The coupling slot 602f and the coupling slot 602g may divide the structural unit 602 into a first part 603 and a second part 604. Both the first part 603 and the second part 604 may be approximately in a C-shaped structure. The first part 603 and the second part 604 are completely separated and not connected. The first part 603 may be coupled to the second part 604 via the coupling slot 602g and the coupling slot 602f. For example, coupling slots on a same side of all structural units 602 may be collinear.

In the embodiment shown in FIG. 28, a difference from the embodiment shown in FIG. 20 is that a slot between any adjacent structural units 602 may have a same width, in other words, slot widths at various positions of the slot may be consistent. Capacitance values of different regions of the constructed first capacitor may be the same.

According to the embodiment shown in FIG. 28, a problem of an electromagnetic shadow can also be mitigated, and split assembly of the structural unit 602 can be implemented, so that an assembly process can be simplified and an assembly yield can be improved. In addition, the coupling slot in the antenna conductive component 60 can allow electromagnetic waves of some frequency bands to pass through, so that the antenna conductive component 60 has a function of expanding a stealth bandwidth to some extent.

Alternatively, an embodiment in which capacitance values of different regions of the first capacitor are the same may be obtained based on embodiments shown in FIG. 15(a), FIG. 16, FIG. 21, FIG. 22, FIG. 24, and the like.

For example, in an embodiment, the same as the embodiment shown in FIG. 15(a) is that the first capacitor may include a first part 52b (which is formed by bending and connecting at least two sub-slots 52d sequentially) and a second part 52c. For the first part 52b and the second part 52c, (S1/d1)>(S2/d2) Different from the embodiment shown in FIG. 15(a), the first part 52b may be filled with an insulation medium with a small dielectric constant, and the second part 52c may be filled with an insulation medium with a large dielectric constant. According to a capacitance formula C=εS/d (ε is a dielectric constant of a medium between plates, S is a plate area, and d is a distance between the plates), a capacitance value of the first part 52b may be equal to a capacitance value of the second part 52c. Because a third part and the first part 52b in the first capacitor may be centrally symmetrical, a capacitance value of the third part may be equal to the capacitance value of the first part; and because a fourth part and the second part 52c may be centrally symmetrical, a capacitance value of the fourth part may be equal to the capacitance value of the second part. Therefore, the capacitance values of the different regions of the first capacitor may be the same.

For example, in another embodiment, the first part 62b shown in FIG. 16 may be filled with an insulation medium with a small dielectric constant, and the second part 62c shown in FIG. 16 may be filled with an insulation medium with a large dielectric constant, so that a capacitance value of the first part 62b is equal to a capacitance value of the first part 62b. Because a third part and the first part 62b in the first capacitor may be centrally symmetrical, a capacitance value of the third part may be equal to the capacitance value of the first part; and because a fourth part and the second part 62c may be centrally symmetrical, a capacitance value of the fourth part may be equal to the capacitance value of the second part. Therefore, the capacitance values of the different regions of the first capacitor may be the same.

For example, in another embodiment, different from the embodiment shown in FIG. 21, a slot between the structural units 92 may be set to have a same width, in other words, slot widths at various positions of the slot may be consistent, so that the capacitance values of the different regions of the first capacitor can be the same.

For example, in another embodiment, different from the embodiment shown in FIG. 22, a same insulation medium may be filled between the structural unit 102 and the conductive substrate 101, so that the capacitance values of the different regions of the first capacitor may be the same.

For example, in another embodiment, different from the embodiment shown in FIG. 24, the capacitance values of the different regions of the first capacitor may be set to be consistent in any one of the foregoing manners.

The foregoing uses the base station antenna 2 shown in FIG. 4 and the base station antenna 2' shown in FIG. 17 and FIG. 18 as examples to describe the electromagnetic stealth design in embodiments of this application in detail. It may be understood that this is merely an example. Actually, the electromagnetic stealth design may be applied to any embodiment of this application.

The foregoing describes embodiments of this application in detail. Specific examples are used in this specification to describe the principle and embodiments of this application. The descriptions of the foregoing embodiments are merely intended to help understand the method and the core idea of this application. In addition, a person of ordinary skill in the art may make modifications to the specific embodiments and an application range according to the idea of this application. Therefore, the content of this specification shall not be construed as a limitation to this application.

## Claims

1. A base station antenna, comprising:
a first antenna array, a frequency selective surface, a second antenna array, and an antenna conductive component, wherein
the frequency selective surface is located between a first radiator of a radiating element of the first antenna array and the second antenna array, and the frequency selective surface is configured to reflect a radiation signal of the first antenna array and transmit a radiation signal of the second antenna array; and
the antenna conductive component and the first antenna array are located on a same side of an array surface of the second antenna array, the antenna conductive component comprises a conductive substrate, a first structural unit, and a second structural unit, both the first structural unit and the second structural unit encircle the conductive substrate once, and the first structural unit and the second structural unit are spaced apart and adjacent to each other, to form a capacitor.

2. The base station antenna according to claim 1, wherein
the conductive substrate comprises a feeding network, and the feeding network is connected to the radiating element of the first antenna array.

3. The base station antenna according to claim 2, wherein
the frequency selective surface is not electrically connected to the first antenna array and the second antenna array, and/or the frequency selective surface is not electrically connected to the feeding network.

4. The base station antenna according to claim 2 or 3, wherein
the first antenna array and the antenna conductive component are located on a same side of the frequency selective surface.

5. The base station antenna according to claim 2 or 3, wherein
the radiating element of the first antenna array comprises a feeding structure, the feeding structure is connected to the first radiator and the feeding network, the feeding structure passes through the frequency selective surface, and the first radiator and the antenna conductive component are respectively located on two opposite sides of the frequency selective surface.

6. The base station antenna according to claim 2 or 3, wherein
the frequency selective surface comprises a first frequency selective surface and a second frequency selective surface that are stacked and spaced apart, wherein the first frequency selective surface is located between the first radiator and the second frequency selective surface; and the radiating element of the first antenna array comprises a feeding structure, wherein the feeding structure is connected to the first radiator and the feeding network, the feeding structure passes through the first frequency selective surface, and the first radiator and the antenna conductive component are respectively located on two opposite sides of the first frequency selective surface.

7. The base station antenna according to claim 2 or 3, wherein
the frequency selective surface comprises a first frequency selective surface and a second frequency selective surface that are stacked and spaced apart, wherein the first frequency selective surface is located between the first radiator and the second frequency selective surface; and
the antenna conductive component passes through the first frequency selective surface, and the radiating element of the first antenna array and the second antenna array are respectively located on two opposite sides of the first frequency selective surface.

8. The base station antenna according to any one of claims 2 to 7, wherein
the first radiator comprises a second radiator and a third radiator, wherein a frequency band of the second radiator is different from a frequency band of the third radiator; and the feeding network comprises a first feeding network and a second feeding network, wherein the first feeding network is electrically connected to the second radiator, and the second feeding network is electrically connected to the third radiator.

9. The base station antenna according to any one of claims 1 to 8, wherein
a radiating element of the second antenna array comprises a fourth radiator and a fifth radiator, and a frequency band of the fourth radiator is different from a frequency band of the fifth radiator.

10. The base station antenna according to any one of claims 1 to 9, wherein
a minimum spacing between the frequency selective surface and the antenna conductive component is greater than or equal to 0.1 time a wavelength corresponding to a highest operating frequency of the second antenna array.

11. The base station antenna according to any one of claims 1 to 10, wherein
the frequency selective surface comprises a plurality of frequency selective units, the plurality of frequency selective units comprise a first frequency selective unit, a structure of the first frequency selective unit is different from a structure of another frequency selective unit, and the first frequency selective unit overlaps an orthographic projection of the antenna conductive component on the frequency selective surface.

12. The base station antenna according to any one of claims 1 to 10, wherein
the frequency selective surface comprises a first part and a second part connected to each other, the first part does not comprise a conductor material, the first part overlaps an orthographic projection of the antenna conductive component on the frequency selective surface, and the second part comprises a conductor material.

13. The base station antenna according to any one of claims 1 to 12, wherein
the base station antenna comprises a first radome and a second radome, the first antenna array, the frequency selective surface, and the antenna conductive component are all located in the first radome, and the second antenna array is located in the second radome.

14. The base station antenna according to any one of claims 1 to 13, wherein
capacitance values of different parts of the capacitor are different.

15. The base station antenna according to any one of claims 1 to 14, wherein
the antenna conductive component comprises at least two structural units, both the first structural unit and the second structural unit are structural units in the at least two structural units, at least one structural unit is provided with a coupling slot, and parts of the structural unit that are respectively located on two sides of the coupling slot are separated by the coupling slot, and are coupled via the coupling slot.

16. The base station antenna according to any one of claims 1 to 15, wherein
the antenna conductive component comprises the at least two structural units, both the first structural unit and the second structural unit are the structural units in the at least two structural units, the at least two structural units are of a same structure, there is a slot between any two adjacent structural units, slots are of a same shape, and the capacitor is formed between any two adjacent structural units.

17. The base station antenna according to any one of claims 1 to 15, wherein
the antenna conductive component comprises the at least two structural units, both the first structural unit and the second structural unit are the structural units in the at least two structural units, structures of the at least two structural units are not totally the same, and/or there is a slot between the at least two structural units, shapes of slots are not totally the same, and the capacitor is formed between any two adjacent structural units.

18. The base station antenna according to any one of claims 1 to 17, wherein
the antenna conductive component is located between the first antenna array and the second antenna array.

19. A base station, comprising:
a pole and the base station antenna according to any one of claims 1 to 18, wherein the base station antenna is fastened to the pole.
